# EUROPEAN PATENT SPECIFICATION

(11) **EP 3 038 303 B1**
(45) Date of publication and mention of the grant of the patent: **19.09.2018**
(21) Application number: 13894264.4
(22) Date of filing: 26.09.2013
(51) Int. Cl.: H04L 12/751, H04L 12/715

(54) **ESTABLISHMENT METHOD AND DEVICE OF A CROSS-DOMAIN PATH**
EINRICHTUNGSVERFAHREN UND -VORRICHTUNG EINES CROSS-DOMAIN-PFADS
PROCÉDÉ ET DISPOSITIF D'ÉTABLISSEMENT D'UN CHEMIN INTER-DOMAINE

(43) Date of publication of application: 29.06.2016
(73) Proprietor: Huawei Technologies Co., Ltd., Longgang District Shenzhen, Guangdong 518129 (CN)
(72) Inventor: LIN, Yi, Shenzhen Guangdong 518129 (CN)
(74) Representative: Gill Jennings & Every LLP
(86) International application number: PCT/CN2013/084312
(87) International publication number: WO 2015/042824

(56) References cited:
- CN-A- 101 106 513
- CN-A- 101 536 375
- CN-A- 101 854 291
- Siamak Azodolmolky ET AL: "Integrated OpenFlow-GMPLS control plane: an overlay model for software defined packet over optical networks References and links", ACM SIGCOMM Comput. Commun. Rev.Optical Society of America, 12 December 2011 (2011-12-12), pages 69-74, XP055281749, Retrieved from the Internet: URL:https://www.osapublishing.org/DirectPD FAccess/40E8115C-E33C-3AD7-B9312E70C6B4CEE F_224728/oe-19-26-B421.pdf?da=1&id=224728& seq=0&mobile=no
- JOHN YU ET AL: "RSVP Extensions in Support of OIF Optical UNI Signaling; draft-yu-mpls-rsvp-oif-uni-00.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, 1 November 2000 (2000-11-01), XP015037182, ISSN: 0000-0004
- XU F ET AL: "Enhanced Crankback Signaling for Multi-Domain Traffic Engineering", COMMUNICATIONS (ICC), 2010 IEEE INTERNATIONAL CONFERENCE ON, IEEE, PISCATAWAY, NJ, USA, 23 May 2010 (2010-05-23), pages 1-6, XP031703274, ISBN: 978-1-4244-6402-9
- SATORU OKAMOTO ET AL: "Multidomain optical networks: issues and challenges - Multi-ASON and GMPLS network domain interworking challenges", IEEE COMMUNICATIONS MAGAZINE, IEEE SERVICE CENTER, PISCATAWAY, US, vol. 45, no. 6, 1 June 2008 (2008-06-01), pages 88-93, XP011216101, ISSN: 0163-6804
- MUOZ R ET AL: "Challenges for GMPLS lightpath provisioning in transparent optical networks: Wavelength constraints in routing and signaling", IEEE COMMUNICATIONS MAGAZINE, IEEE SERVICE CENTER, PISCATAWAY, US, vol. 47, no. 8, 1 August 2009 (2009-08-01) , pages 26-34, XP011282119, ISSN: 0163-6804, DOI: 10.1109/MCOM.2009.5181889

## Description

### TECHNICAL FIELD

Embodiments of the present invention relate to communications technologies, and in particular, to a method for establishing a cross-domain path, and a device.

### BACKGROUND

A conventional optical network is a system based on manual management. Establishment, maintenance and removing of an optical connection all need manual intervention. With a continuous increase in types and a quantity of services carried by a network, the conventional optical network can no longer meet a requirement of dynamic and flexible networking. Therefore, Telecommunication Standardization Sector of the International Telecommunication Union (ITU-T for short) puts forward an architecture of an automatically switched optical network (ASON for short). Compared with the conventional optical network, a control plane is introduced to the ASON, and link management, routing and signaling functions of the control plane are implemented by using a Generalized Multiprotocol Label Switching (GMPLS for short) protocol stack, so as to complete dynamic establishment of an optical connection.

In the ASON, a distributed control architecture is used. In an actual application, if multiple different nodes compute paths simultaneously, the multiple different nodes may select a same link resource for an intermediate section of the paths, and when a link is started to be established, at this link resource, these paths may conflict, causing signaling crankback.

Therefore, new centralized transport network control is put forward in the industry. A transport network controller is introduced to a transport network, and network topology discovery, path computation, and path establishment are implemented by the transport network controller. However, because a transport network based on GMPLS control has been widely used, when a new transport network based on centralized control is deployed, how to implement dynamic establishment of a path between networks of two different types without changing an existing transport network needs to be considered.

Siamak Azodolmolky ET AL: "Integrated OpenFlow-GMPLS control plane: an overlay model for software defined packet over optical networks References and links",ACM SIGCOMM Comput. Commun. Rev.Optical Society of America, 12 December 2011 (2011-12-12), pages 69-74, XP055281749, discloses a path setup between two OpenFlow -controlled networks, the path traversing a GMPLS-controlled network.

### SUMMARY

Embodiments of the present invention provide a method for establishing a cross-domain path, and a device, to implement dynamic establishment of a path between networks of different types.

In particular, the present disclosure provides methods according to claims 1, 4, 5 and 6, transport network controllers according to claims 8 and 13, and network nodes according to claims 11 and 12. Further technical features of each of these aspects are defined in the respective dependent claims.

According to the method for establishing a cross-domain path and the device provided in the embodiments of the present invention, a transport network controller that is set in a first network receives a cross-domain path establishment request, and acquires a first subpath, in the first network, of a target path according to topology information and TE information of the first network; allocates a network resource to a link between nodes on the first subpath according to bandwidth information, so that the nodes establish a connection; sends a path message to a second boundary node of a second network by using a control channel, so that the second boundary node and a last node establish a second subpath, in the second network, of the target path according to the path message, and complete connecting nodes on the second subpath; and after receiving a network resource that is sent by the second boundary node by using the control channel and that corresponds to a cross-domain link, sends an indication message to a first boundary node, so that the first boundary node connects the first subpath and the second subpath; therefore, dynamic establishment of a path between networks of different types is implemented.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of Embodiment 1 of a method for establishing a cross-domain path according to the present invention;
FIG. 2 is a flowchart of Embodiment 2 of a method for establishing a cross-domain path according to the present invention;
FIG. 3 is a flowchart of Embodiment 3 of a method for establishing a cross-domain path according to the present invention;
FIG. 4 is a flowchart of Embodiment 4 of a method for establishing a cross-domain path according to the present invention;
FIG. 5 is a flowchart of Embodiment 5 of a method for establishing a cross-domain path according to the present invention;
FIG. 6 is a flowchart of Embodiment 6 of a method for establishing a cross-domain path according to the present invention;
FIG. 7 is a flowchart of Embodiment 7 of a method for establishing a cross-domain path according to the present invention;
FIG. 8 is a flowchart of Embodiment 8 of a method for establishing a cross-domain path according to the present invention;
FIG. 9 is a schematic diagram of Embodiment 1 of a network topology for a method for establishing a cross-domain path according to the present invention;
FIG. 10 is a schematic diagram of Embodiment 2 of a network topology for a method for establishing a cross-domain path according to the present invention;
FIG. 11 is a schematic structural diagram of Embodiment 1 of a transport network controller according to the present invention;
FIG. 12 is a schematic structural diagram of Embodiment 1 of a network node according to the present invention;
FIG. 13 is a schematic structural diagram of Embodiment 2 of a network node according to the present invention; and
FIG. 14 is a schematic structural diagram of Embodiment 2 of a transport network controller according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

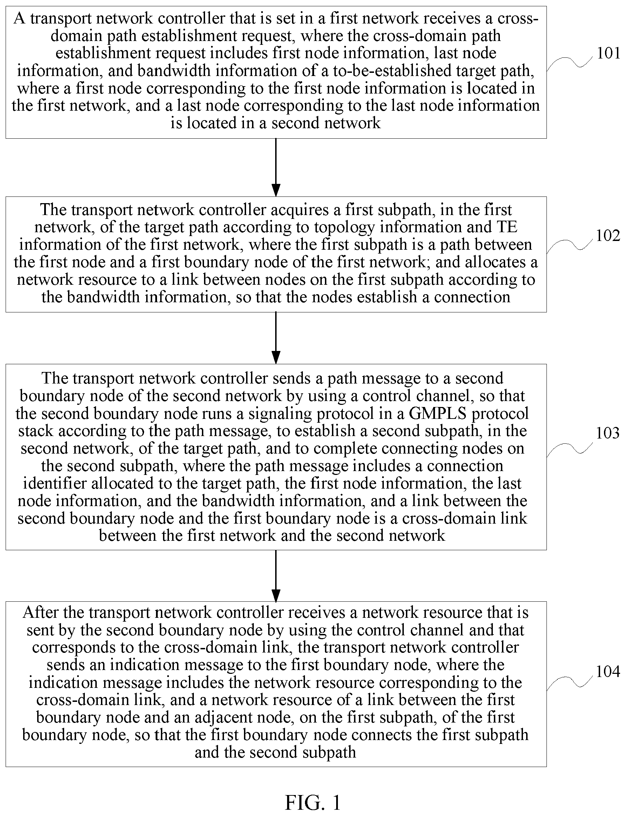

FIG. 1 is a flowchart of Embodiment 1 of a method for establishing a cross-domain path according to the present invention. In this embodiment, a first network is a transport network based on centralized control, a second network is a transport network based on GMPLS control, and the method provided in this embodiment may be specifically executed by a transport network controller. As shown in FIG. 1, the method provided in this embodiment may include:
S101: A transport network controller that is set in the first network receives a cross-domain path establishment request, where the cross-domain path establishment request includes first node information, last node information, and bandwidth information of a to-be-established target path, where a first node corresponding to the first node information is located in the first network, and a last node corresponding to the last node information is located in the second network.

A person skilled in the art may know that, the cross-domain path establishment request may be sent by a network management system, or may be sent by a client-layer network controller, or may be sent by the first node of the to-be-established target path, which is not limited in this embodiment.

It may be understood that, optionally, the cross-domain path establishment request may further include protection and restoration type information, and delay information, hop count information and/or jitter information of the target path, which is not limited in this embodiment.

S102: The transport network controller acquires a first subpath, in the first network, of the target path according to topology information and traffic engineering (TE for short) information of the first network, where the first subpath is a path between the first node and a first boundary node of the first network; and allocates a network resource to a link between nodes on the first subpath according to the bandwidth information, so that the nodes establish a connection.

A person skilled in the art may know that, optionally, that the transport network controller acquires the topology information and the TE information of the first network may be: a routing protocol, such as the Open Shortest Path First protocol (OSPF protocol for short) or the Intermediate System to Intermediate System Routing Protocol (IS-IS for short), that runs on nodes of the first network, and the transport network controller acquires the topology information and the TE information of the first network by receiving routing information flooded by the nodes; or the transport network controller receives peer information and TE information, which are directly reported by nodes of the first network, of links connected to the nodes, so that the transport network controller acquires the topology information and the TE information of the first network according to the peer information and the TE information of the links of the nodes.

It should be noted that, in this step, the transport network controller may randomly select, in the first network, a cross-domain link that satisfies a bandwidth requirement of the target path, uses a node, in the first network, of the cross-domain link as the first boundary node, and then acquires the first subpath according to the topology information and the TE information of the first network.

In another implementation manner, if the second network has a path computation element (PCE for short), the transport network controller may send a path computation request to the PCE and acquire shortest paths that are from boundary nodes, connected to the first network, in the second network to the last node, and corresponding costs, where the shortest paths and the corresponding costs are acquired by the PCE; compute the cross-domain link according to the topology information and the TE information of the first network; and acquire the first subpath.

It may be understood that, in the step of allocating a network resource to a link between nodes on the first subpath according to the bandwidth information, in an optical transport network (OTN for short), the network resource may be a timeslot resource, and in a wavelength division multiplexing (WDM for short) network, the network resource may be a wavelength resource, which is not limited in this embodiment.

S103: The transport network controller sends a path message to a second boundary node of the second network by using a control channel, so that the second boundary node runs a signaling protocol in a GMPLS protocol stack according to the path message, to establish a second subpath, in the second network, of the target path, and to complete connecting nodes on the second subpath, where the path message includes a connection identifier allocated to the target path, the first node information, the last node information, and the bandwidth information, and a link between the second boundary node and the first boundary node is a cross-domain link between the first network and the second network.

A person skilled in the art may understand that, in this embodiment, the GMPLS protocol needs to be run on the transport network controller, so that the transport network controller may communicate with a node in the second network by using the path message.

In this step, the transport network controller allocates, to the target path, a connection identifier that uniquely corresponds to the target path, where optionally, the connection identifier may include a tunnel identifier and a target path identifier. After the connection identifier is allocated to the target path, the transport network controller generates the path message, and sends the path message to the second boundary node of the second network.

S104: After the transport network controller receives a network resource that is sent by the second boundary node by using the control channel and that corresponds to the cross-domain link, the transport network controller sends an indication message to the first boundary node, where the indication message includes the network resource corresponding to the cross-domain link, and a network resource of a link between the first boundary node and an adjacent node, on the first subpath, of the first boundary node, so that the first boundary node connects the first subpath and the second subpath.

In this step, after the transport network controller receives the network resource that is sent by the second boundary node and that corresponds to the cross-domain link, the transport network controller saves the network resource, acquires the network resource that is previously allocated to the link between the first boundary node and the adjacent node, on the first subpath, of the first boundary node, and sends the indication message to the first boundary node. Optionally, the indication message may be sent to the first boundary node by using the Openflow protocol, the Transaction Language 1 (TL1 for short) protocol, or the Path Computation Element Communication Protocol (PCECP for short), so that the first boundary node establishes a cross-connection between the network resource, on the first boundary node, of the cross-domain link and the network resource of the link that is between the first boundary node and the adjacent node, on the first subpath, of the first boundary node, that is, the first boundary node connects the first subpath and the second subpath, where a type of a used protocol is not limited in this embodiment.

According to the technical solution of this embodiment, a transport network controller that is set in a first network receives a cross-domain path establishment request; acquires a first subpath, in the first network, of a target path according to topology information and TE information of the first network, and allocates a network resource to a link between nodes on the first subpath according to bandwidth information, so that the nodes establish a connection; sends a path message to a second boundary node of a second network by using a control channel, so that the second boundary node and a last node establish a second subpath, in the second network, of the target path according to the path message, and complete connecting nodes on the second subpath; and after receiving a network resource that is sent by the second boundary node by using the control channel and that corresponds to a cross-domain link, sends an indication message to a first boundary node, so that the first boundary node connects the first subpath and the second subpath; therefore, dynamic establishment of a path between networks of different types is implemented.

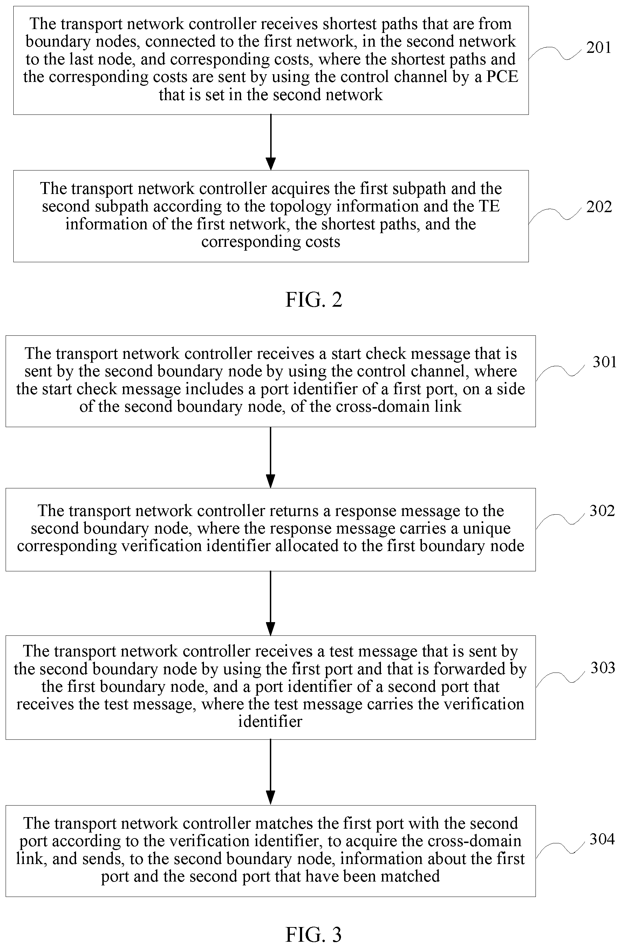

FIG. 2 is a flowchart of Embodiment 2 of a method for establishing a cross-domain path according to the present invention. On the basis of the foregoing embodiment, this embodiment may be applied to a scenario in which the second network has a PCE. As shown in FIG. 2, the method provided in this embodiment may further include:
S201: The transport network controller receives shortest paths that are from boundary nodes, connected to the first network, in the second network to the last node, and corresponding costs, where the shortest paths and the corresponding costs are sent by using the control channel by a PCE that is set in the second network.

After receiving the cross-domain path establishment request, the transport network controller may communicate with the PCE, and coordinates with the PCE to complete acquiring the target path.

Correspondingly, the foregoing S102 may be specifically:
S202: The transport network controller acquires the first subpath and the second subpath according to the topology information and the TE information of the first network, the shortest paths, and the corresponding costs.

It may be understood that, in this embodiment, the path message that the transport network controller returns to the second boundary node may further include the second subpath.

According to the technical solution of this embodiment, the transport network controller receives shortest paths that are from boundary nodes, connected to the first network, in the second network to the last node, and corresponding costs, where the shortest paths and the corresponding costs are sent by using the control channel by a PCE that is set in the second network, so that the transport network controller acquires the first subpath and the second subpath of the target path according to the topology information and the TE information of the first network, the shortest paths, and the corresponding costs, and notifies the second boundary node of the second subpath by using the path message; therefore, dynamic establishment of a path between networks of different types is implemented.

FIG. 3 is a flowchart of Embodiment 3 of a method for establishing a cross-domain path according to the present invention. Based on the foregoing embodiments, in the method provided in this embodiment, before S103, the method may further include:
S301: The transport network controller receives a start check message that is sent by the second boundary node by using the control channel, where the start check message includes a port identifier of a first port, on a side of the second boundary node, of the cross-domain link.
   It should be noted that, in this embodiment, a method for configuring the control channel may include: configuring a control plane address, on the second boundary node, of the first boundary node as an address of the transport network controller; therefore, the start check message that the second boundary node sends, in the prior art, to the first boundary node by using the control channel may be sent to the transport network controller, so that the transport network controller knows the port identifier of the first port, at the side of the second boundary node, of the cross-domain link.
S302: The transport network controller returns a response message to the second boundary node, where the response message carries a unique corresponding verification identifier allocated to the first boundary node.
   It may be understood that, after receiving the start check message, the transport network controller saves the port identifier of the first port, allocates one unique corresponding verification identifier to the first boundary node, and adds the verification identifier to the response message and returns the response message to the second boundary node, so that subsequently, after receiving a test message forwarded by the first boundary node, the transport network controller matches, according to the verification identifier, the first port with a second port by using which the first boundary node receives the test message.
S303: The transport network controller receives a test message that is sent by the second boundary node by using the first port and that is forwarded by the first boundary node, and a port identifier of a second port that receives the test message, where the test message carries the verification identifier.
S304: The transport network controller matches the first port with the second port according to the verification identifier, to acquire the cross-domain link, and sends, to the second boundary node, information about the first port and the second port that have been matched.

According to the technical solution of this embodiment, the transport network controller receives a start check message that is sent by the second boundary node by using the control channel, allocates a unique corresponding verification identifier to the first boundary node, and adds the verification identifier to the response message and returns the response message to the second boundary node; the transport network controller receives a test message that is sent by the second boundary node by using the first port and that is forwarded by the first boundary node, and a port identifier of a second port that receives the test message, matches the first port with the second port according to the verification identifier, to acquire the cross-domain link, and sends, to the second boundary node, information about the first port and the second port that have been matched, so that the transport network controller and the second boundary node know the cross-domain link.

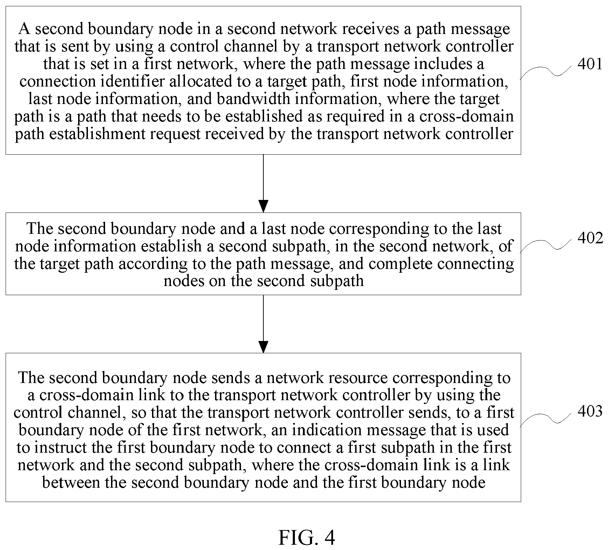

FIG. 4 is a flowchart of Embodiment 4 of a method for establishing a cross-domain path according to the present invention. In this embodiment, a first network is a transport network based on centralized control, a second network is a transport network based on GMPLS control, and the method provided in this embodiment may be specifically executed by a second boundary node in a second network. As shown in FIG. 4, the method provided in this embodiment may include:
S401: A second boundary node in the second network receives a path message that is sent by using a control channel by a transport network controller that is set in the first network, where the path message includes a connection identifier allocated to a target path, first node information, last node information, and bandwidth information, where the target path is a path that needs to be established as required in a cross-domain path establishment request received by the transport network controller.
   It should be noted that, the connection identifier uniquely corresponds to the target path. The connection identifier is allocated to the target path by the transport network controller, and optionally, the connection identifier may include a tunnel identifier and a target path identifier.
S402: The second boundary node and a last node corresponding to the last node information establish a second subpath, in the second network, of the target path according to the path message, and complete connecting nodes on the second subpath.
S403: The second boundary node sends a network resource corresponding to a cross-domain link to the transport network controller by using the control channel, so that the transport network controller sends, to a first boundary node of the first network, an indication message that is used to instruct the first boundary node to connect a first subpath in the first network and the second subpath, where the cross-domain link is a link between the second boundary node and the first boundary node.

It should be noted that, the network resource corresponding to the cross-domain link is allocated to the cross-domain link by the second boundary node.

According to the technical solution of this embodiment, a second boundary node receives a path message that is sent by using a control channel by a transport network controller; the second boundary node and a last node corresponding to last node information establish a second subpath, in a second network, of a target path according to the path message, and complete connecting nodes on the second subpath; the second boundary node sends a network resource corresponding to a cross-domain link to the transport network controller by using the control channel, so that the transport network controller sends, to a first boundary node of a first network, an indication message that is used to instruct the first boundary node to connect a first subpath in the first network and the second subpath; therefore, dynamic establishment of a path between networks of different types is implemented.

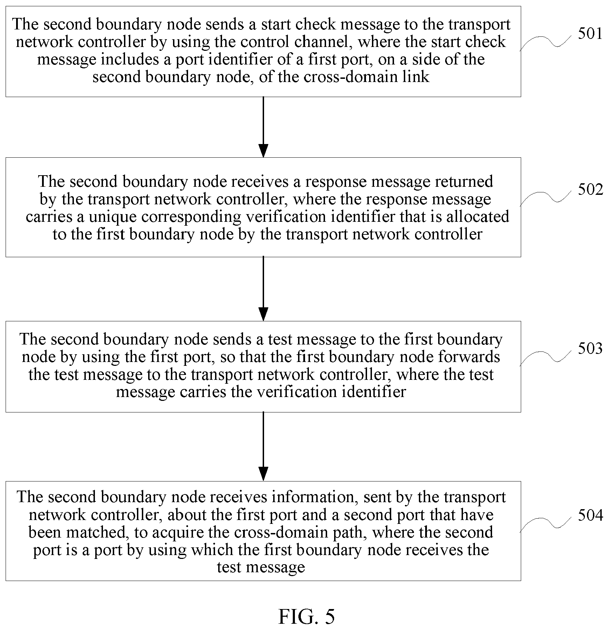

FIG. 5 is a flowchart of Embodiment 5 of a method for establishing a cross-domain path according to the present invention. Based on the foregoing embodiment, in the method provided in this embodiment, before S401, the method may further include:
S501: The second boundary node sends a start check message to the transport network controller by using the control channel, where the start check message includes a port identifier of a first port, on a side of the second boundary node, of the cross-domain link.
   It should be noted that, in this embodiment, a method for configuring the control channel may include: configuring a control plane address, on the second boundary node, of the first boundary node as an address of the transport network controller, to acquire the control channel between the second boundary node and the transport network controller.
S502: The second boundary node receives a response message returned by the transport network controller, where the response message carries a unique corresponding verification identifier that is allocated to the first boundary node by the transport network controller.
   Refer to the description in S302.
S503: The second boundary node sends a test message to the first boundary node by using the first port, so that the first boundary node forwards the test message to the transport network controller, where the test message carries the verification identifier.
S504: The second boundary node receives information, sent by the transport network controller, about the first port and a second port that have been matched, to acquire the cross-domain path, where the second port is a port by using which the first boundary node receives the test message.

According to the technical solution of this embodiment, the second boundary node sends a start check message to the transport network controller by using the control channel, where the start check message includes a port identifier of a first port, on a side of the second boundary node, of the cross-domain link; receives a response message returned by the transport network controller, sends a test message to the first boundary node by using the first port, so that the first boundary node forwards the test message to the transport network controller; and receives information, sent by the transport network controller, about the first port and a second port that have been matched, to acquire the cross-domain path, so that the transport network controller and the second boundary node know the cross-domain link.

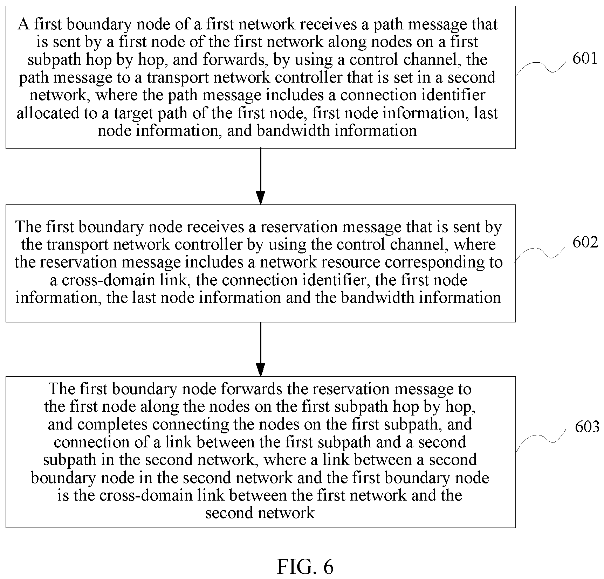

FIG. 6 is a flowchart of Embodiment 6 of a method for establishing a cross-domain path according to the present invention. In this embodiment, a first network is a transport network based on GMPLS control, a second network is a transport network based on centralized control, and the method provided in this embodiment may be specifically executed by a first boundary node in the first network. As shown in FIG. 6, the method provided in this embodiment may include:
S601: A first boundary node of the first network receives a path message that is sent by a first node of the first network along nodes on a first subpath hop by hop, and forwards, by using a control channel, the path message to a transport network controller that is set in the second network, where the path message includes a connection identifier allocated to a target path by the first node, first node information, last node information, and bandwidth information.
   In a feasible implementation manner, if the first network has a PCE, the first node may send a path computation request to the PCE, so that the PCE sends the path computation request to the transport network controller, and receives shortest paths that are from boundary nodes, connected to the first network, in the second network to the last node, and corresponding costs, where the shortest paths and the corresponding costs are returned by the transport network controller; the first node receives the first subpath and a second subpath that are returned by the PCE and that are acquired by the PCE according to topology information and TE information of the first network, the shortest paths, and the corresponding costs. Correspondingly, the path message may further include the second subpath.
S602: The first boundary node receives a reservation message that is sent by the transport network controller by using the control channel, where the reservation message includes a network resource corresponding to a cross-domain link, the connection identifier, the first node information, the last node information and the bandwidth information.
   It should be noted that, the network resource corresponding to the cross-domain link is allocated by the transport network controller. After receiving the reservation message, the first boundary node forwards the reservation message to nodes on the first subpath until the reservation message arrives at the first node, so that the nodes on the first subpath are connected, and the first subpath and the second subpath are connected.
S603: The first boundary node forwards the reservation message to the first node along the nodes on the first subpath hop by hop, and completes connecting the nodes on the first subpath, and connection of a link between the first subpath and a second subpath in the second network, where a link between a second boundary node in the second network and the first boundary node is the cross-domain link between the first network and the second network.

According to the technical solution of this embodiment, a first boundary node of a first network receives a path message that is sent by a first node of the first network along nodes on a first subpath hop by hop, and forwards, by using a control channel, the path message to a transport network controller that is set in a second network; the first boundary node receives a reservation message that is sent by the transport network controller by using the control channel; the first boundary node forwards the reservation message to the first node along the nodes on the first subpath hop by hop, and completes connecting the nodes on the first subpath, and connection of a link between the first subpath and a second subpath in the second network; therefore, dynamic establishment of a path between networks of different types is implemented.

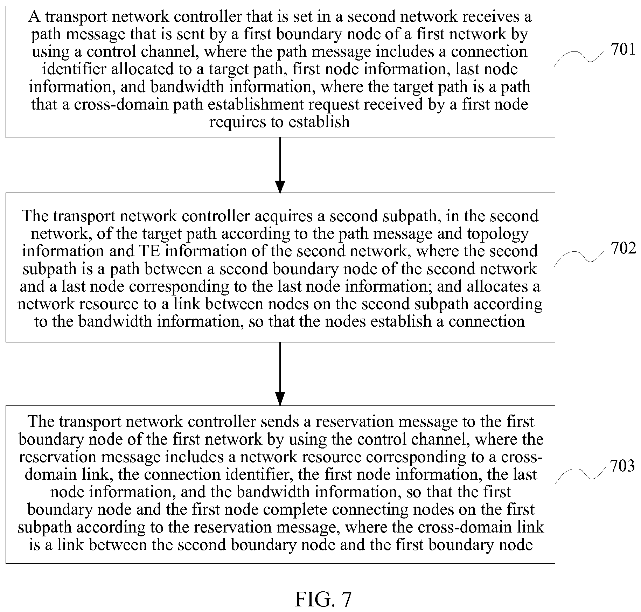

FIG. 7 is a flowchart of Embodiment 7 of a method for establishing a cross-domain path according to the present invention. In this embodiment, a first network is a transport network based on GMPLS control, a second network is a transport network based on centralized control, and the method provided in this embodiment may be specifically executed by a transport network controller. As shown in FIG. 7, the method provided in this embodiment may include:
S701: A transport network controller that is set in the second network receives a path message that is sent by a first boundary node of the first network by using a control channel, where the path message includes a connection identifier allocated to a target path, first node information, last node information, and bandwidth information, where the target path is a path that needs to be established as required in a cross-domain path establishment request received by a first node.
   It should be noted that, in an implementation scenario in which the first network has a PCE, the path message received by the transport network controller may further include a second subpath. The connection identifier uniquely corresponds to the target path.
S702: The transport network controller acquires a second subpath, in the second network, of the target path according to the path message and topology information and TE information of the second network, where the second subpath is a path between a second boundary node of the second network and a last node corresponding to the last node information; and allocates a network resource to a link between nodes on the second subpath according to the bandwidth information, so that the nodes establish a connection.
   In a specific implementation process, if in S701, the path message received by the transport network controller includes the second subpath, in this step, the transport network controller may allocate the network resource to the link between the nodes on the second subpath directly according to the second subpath and the bandwidth information, so that the nodes establish the connection.
S703: The transport network controller sends a reservation message to the first boundary node of the first network by using the control channel, where the reservation message includes a network resource corresponding to a cross-domain link, the connection identifier, the first node information, the last node information, and the bandwidth information, so that the first boundary node and the first node complete connecting nodes on the first subpath according to the reservation message, where the cross-domain link is a link between the second boundary node and the first boundary node.

According to the technical solution of this embodiment, a transport network controller receives a path message that is sent by a first boundary node of a first network by using a control channel; acquires a second subpath, in a second network, of a target path according to the path message and topology information and TE information of the second network; and allocates a network resource to a link between nodes on the second subpath according to the bandwidth information, so that the nodes establish a connection; the transport network controller sends a reservation message to a first boundary node of the first network by using the control channel, so that the first boundary node and the first node complete connecting nodes on the first subpath according to the reservation message; therefore, dynamic establishment of a path between networks of different types is implemented.

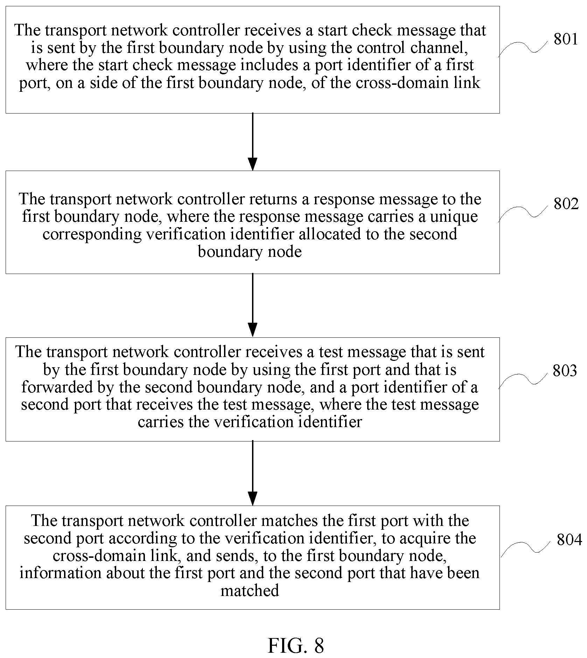

FIG. 8 is a flowchart of Embodiment 8 of a method for establishing a cross-domain path according to the present invention. Based on the foregoing embodiment, in the method provided in this embodiment, before S701, the method may further include:
S801: The transport network controller receives a start check message that is sent by the first boundary node by using the control channel, where the start check message includes a port identifier of a first port, on a side of the first boundary node, of the cross-domain link.
   It should be noted that, in this embodiment, a method for configuring the control channel may include: configuring a control plane address on the first boundary node, of the second boundary node as an address of the transport network controller, to acquire the control channel between the first boundary node and the transport network controller.
S802: The transport network controller returns a response message to the first boundary node, where the response message carries a unique corresponding verification identifier allocated to the second boundary node.
   It may be understood that, after receiving the start check message, the transport network controller saves the port identifier of the first port, allocates one unique corresponding verification identifier to the second boundary node, and adds the verification identifier to the response message and returns the response message to the first boundary node, so that subsequently, after receiving a test message forwarded by the second boundary node, the transport network controller matches, according to the verification identifier, the first port with a second port by using which the second boundary node receives the test message.
S803: The transport network controller receives a test message that is sent by the first boundary node by using the first port and that is forwarded by the second boundary node, and a port identifier of a second port that receives the test message, where the test message carries the verification identifier.
S804: The transport network controller matches the first port with the second port according to the verification identifier, to acquire the cross-domain link, and sends, to the first boundary node, information about the first port and the second port that have been matched.

According to the technical solution of this embodiment, the transport network controller receives a start check message that is sent by the first boundary node by using the control channel, allocates a unique corresponding verification identifier to the second boundary node, and adds the verification identifier to the response message and returns the response message to the first boundary node; the transport network controller receives a test message that is sent by the first boundary node by using the first port and that is forwarded by the second boundary node, and a port identifier of a second port that receives the test message, matches the first port with the second port according to the verification identifier, to acquire the cross-domain link, and sends, to the first boundary node, information about the first port and the second port that have been matched, so that the transport network controller and the second boundary node know the cross-domain link.

To make the foregoing methods for establishing a cross-domain path more specific, the methods for establishing a cross-domain path are described in detail below by separately using examples in which a first node is in a centralized control-based transport network and in which a first node is in a GMPLS control-based transport network.

A first application scenario is: a first node is in a centralized control-based transport network, and the transport network is controlled by a transport network controller; a last node is in a GMPLS control-based transport network, and the transport network is controlled by nodes in the transport network that run a distributed GMPLS protocol.

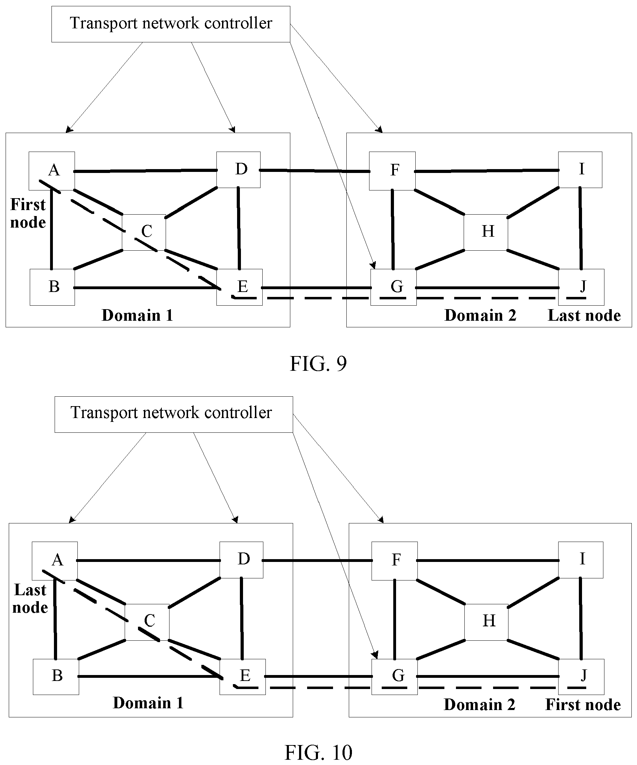

FIG. 9 is a schematic diagram of Embodiment 1 of a network topology for a method for establishing a cross-domain path according to the present invention. As shown in FIG. 9, in this embodiment, it is assumed that the centralized control-based transport network is a domain 1, and the GMPLS control-based transport network is a domain 2, a first node of a to-be-established target path included in a cross-domain path establishment request is a node A, and a last node of the target path is a node J.

First, a control channel is configured for a cross-domain link, and the transport network controller, a boundary node F, and a boundary node G are made to acquire the cross-domain link.

Specifically, acquiring a cross-domain link D-F is used as an example for description. First, a control plane address, on the boundary node F, of the boundary node D is configured to be an address of the transport network controller, to acquire a control channel between the boundary node F and the transport network controller. Then, the boundary node F sends a start check message to the transport network controller by using the control channel, where the start check message includes a port identifier of a first port PI of the boundary node F. The transport network controller saves the port identifier of PI, allocates a unique corresponding verification identifier Verify ID to the boundary node D, and adds Verify ID to the response message and returns the response message to the boundary node F; the boundary node F sends, from PI, a test message to the boundary node D, where the test message carries Verify ID; the boundary node D forwards the received test message to the transport network controller, and indicates a port identifier of a second port P2 that receives the test message; the transport network controller obtains, by means of matching according to Verify ID in the test message, that the test message is sent from the PI port of the boundary node F to the P2 port of the boundary node D, and therefore learns that a cross-domain link exists between the PI port and the P2 port.

The transport network controller acquires topology information and TE information of the centralized control-based transport network domain 1. Optionally, the transport network controller may receive peer information and TE information, which are directly reported by nodes in the domain 1, of links connected to the nodes, and acquires the topology information and the TE information of the domain 1 according to the peer information and the TE information of the links of the nodes; or a routing protocol is run on nodes in the centralized control-based transport network domain 1, and the transport network controller acquires the topology information and the TE information of the domain 1 by receiving routing information flooded by the nodes.

It should be noted that, there is no strict time sequence relationship between that the transport network controller configures a control channel for a cross-domain link, and the transport network controller, the boundary node F and the boundary node G are made to acquire the cross-domain link, and that the transport network controller acquires topology information and TE information of the domain 1.

The transport network controller receives a cross-domain path establishment request. The cross-domain path establishment request may be sent by a network management system, or may be sent by a client-layer network controller, or may be sent by the first node of the to-be-established target path, that is, sent by the node A in FIG. 9. The cross-domain path establishment request includes first node information, last node information, and bandwidth information of the to-be-established target path. In this embodiment, a first node corresponding to the first node information is A, and a last node corresponding to the last node information is J.

After receiving the cross-domain path establishment request, the transport network controller acquires the target path. Specifically, if the domain 2 has a PCE, the transport network controller may send a path computation request to the PCE, where the path computation request indicates that the first node is the node A, that the last node is the node J, and the bandwidth information of the target path; after receiving the path computation request, the PCE separately computes shortest paths that are from the boundary node F and the boundary node G, which are connected to the domain 1, of the domain 2 to the last node J, for example, a shortest path F-H-J and a shortest path G-J, and corresponding costs, and returns the shortest path F-H-J and the shortest path G-J and the corresponding costs to the transport network controller; the transport network controller acquires a shortest path between the first node A and the last node J, that is, the target path, according to the topology information and the TE information of the domain 1, the shortest paths, and the corresponding costs, where it is assumed that the acquired target path is A-C-E-G-J. If the domain 2 has no PCE, the transport network controller may select one of cross-domain links D-F and E-G that are between the domain 1 and the domain 2; assuming that the selected cross-domain link is E-G, the transport network controller computes a first subpath between the first node A and the boundary node E, in the domain 1, of the cross-domain link E-G, where it is assumed that the computed first subpath is A-C-E.

The transport network controller allocates suitable network resources to a link A-C and a link C-E that are on the first subpath A-C-E, for example, in an OTN network, timeslot resources may be allocated to the links, and in a WDM network, wavelength resources may be allocated to the links. Then, the transport network controller may deliver a configuration command to the first node A and the node C by using the OpenFlow protocol, so that the first node A configures a cross-connection between a client-side port and a network resource that is allocated to the link A-C, and the node C configures a cross-connection between a network resource allocated to the link A-C and a network resource allocated to the link C-E.

After the nodes on the first subpath establish connections, the transport network controller searches for all paths whose first nodes are the node A and whose last nodes are in the domain 2, and acquires connection identifiers of the paths, where the connection identifier may include, for example, a tunnel identifier and a path identifier. The transport network controller allocates, to the target path, a connection identifier that is different from the connection identifiers of the foregoing paths and that uniquely corresponds to the target path, generates a path message, and sends the path message to the boundary node G, where the path message includes the connection identifier allocated to the target path, the first node information, the last node information, and the bandwidth information. Optionally, the path message may further include explicit route object(ERO for short) information, where the ERO information is used to indicate nodes or links through which the target path needs to pass.

After receiving the path message, the boundary node G forwards the path message to a next-hop node on the target path, that is, the last node J; after receiving the path message, the last node J allocates, on a link G-J, a network resource to a second subpath, establishes a cross-connection between a client-side port, on the last node J, of the second subpath and the network resource of the link G-J, and returns a response message to the boundary node G, where the response message carries the network resource allocated to the link G-J; after receiving the response message, the boundary node G allocates a network resource to the cross-domain link E-G, and establishes a cross-connection between the network resource of the link E-G and the network resource of the link G-J, and the boundary node G sends, to the transport network controller, the network resource corresponding to the cross-domain link E-G.

After receiving the network resource corresponding to the cross-domain link E-G, the transport network controller saves the network resource corresponding to the cross-domain link E-G, and delivers an indication message to the boundary node E by using the OpenFlow protocol, where the indication message includes the network resource corresponding to the cross-domain link E-G and the network resource corresponding to the link C-E, so that the boundary node E establishes a cross-connection between the network resource of the link C-E and the network resource of the link E-G.

Till now, establishment of a cross-domain path whose first node is in the domain 1 and whose last node is in the domain 2 is completed. Therefore, dynamic establishment of a path between networks of different types is implemented.

A second application scenario is: a first node is in a GMPLS control-based transport network, and the transport network is controlled by nodes in the transport network that run a distributed GMPLS protocol; a last node is in a centralized control-based transport network, and the transport network is controlled by a transport network controller.

FIG. 10 is a schematic diagram of Embodiment 2 of a network topology for a method for establishing a cross-domain path according to the present invention. As shown in FIG. 10, in this embodiment, it is assumed that the centralized control-based transport network is a domain 1, and the GMPLS control-based transport network is a domain 2, a first node of a to-be-established target path included in a cross-domain path establishment request is a node J, and a last node of the target path is a node A.

First, a control channel is configured for a cross-domain link, and the transport network controller, a boundary node F, and a boundary node G are made to acquire the cross-domain link. The transport network controller acquires topology information and TE information of the centralized control-based transport network domain 1.

It should be noted that, there is no strict time sequence relationship between that the transport network controller configures a control channel for a cross-domain link, and the transport network controller, a boundary node F and a boundary node G are made to acquire the cross-domain link, and that the transport network controller acquires topology information and TE information of the domain 1.

The first node J receives a cross-domain path establishment request. The cross-domain path establishment request may be sent by a network management system, or may be sent by a client-layer network controller, or may be sent by the first node J of the to-be-established target path. The cross-domain path establishment request includes first node information, last node information, and bandwidth information of the to-be-established target path. In this embodiment, a first node corresponding to the first node information is J, and a last node corresponding to the last node information is A.

After receiving the cross-domain path establishment request, the first node J acquires the target path. Specifically, if the domain 2 has a PCE, the first node J may request the PCE to perform path computation. In this case, the PCE sends a path computation request to the transport network controller, where the path computation request indicates that the first node is the node J, that the last node is the node A, and the bandwidth information of the target path; after receiving the path computation request, the transport network controller separately computes shortest paths that are from a boundary node D and a boundary node E, which are connected to the domain 2, of the domain 1 to the last node A, for example, a shortest path D-A and a shortest path E-C-A, and corresponding costs, and returns the shortest path D-A and the shortest path E-C-A and the corresponding costs to the PCE; the PCE computes a shortest path between the first node J and the last node A, that is, the target path, according to the topology information and the TE information of the domain 2, the shortest paths, and the corresponding costs, where it is assumed that the computed target path is J-G-E-C-A. If the domain 2 has no PCE, the first node J may select one of cross-domain links D-F and E-G that are between the domain 1 and the domain 2; assuming that the selected cross-domain link is E-G, the first node J computes a first subpath between the first node J and the boundary node G, in the domain 2, of the cross-domain link E-G, where it is assumed that the computed result is J-G.

The first node J sends a path message to a next-hop node on the target path, that is, the boundary node G, where the path message includes a connection identifier allocated to the target path, the first node information, the last node information, and the bandwidth information. Optionally, the path message may further include ERO information, where the ERO information is used to indicate nodes or links through which the target path needs to pass. Specifically, if, at this time, the first node J has determined the nodes or links through which the target path needs to pass, the ERO information may include information about a complete path, that is, a target path J-G-E-C-A; if, at this time, the first node J knows only the first subpath in the domain 2, the ERO information may include information about a loose route, that is, a path J-G-E-A, where specific nodes or links through which a second subpath E-A in the domain 1 passes are not determined yet.

The boundary node G forwards the path message to the transport network controller; after receiving the path message, the transport network controller acquires the second subpath, in the domain 1, of the target path according to the path message and the topology information and the TE information of the domain 1, where the second subpath is a path between the boundary node E of the domain 2 and the last node A, and it is assumed that the second subpath is E-C-A. It should be noted that, if the path message includes the information about a complete path, the transport network controller does not need to acquire the second subpath, but directly performs the following operations.

The transport network controller allocates a corresponding network resource to a link G-E, a link E-C and a link C-A, and delivers a configuration command to the last node A, a node C, and the boundary node E by using, for example, the OpenFlow protocol, so that the last node A configures a cross-connection between a client-side port of the node A and a network resource allocated to the link A-C; the node C configures a cross-connection between a network resource allocated to the link A-C and a network resource allocated to the cross-domain link C-E; and the node E configures a cross-connection between a network resource allocated to the link C-E and a network resource allocated to the cross-domain link E-G.

The transport network controller sends a reservation message to the boundary node G, where the reservation message includes a network resource corresponding to the cross-domain link E-G, the connection identifier, the first node information, the last node information, and the bandwidth information; after receiving the reservation message, the boundary node G allocates a network resource to a link G-J on the first subpath, acquires a network resource that is allocated to the cross-domain link E-G by the transport network controller, and establishes a cross-connection between the network resource of the link E-G and the network resource of the link G-J; the boundary node G forwards the reservation message to the last node J, so that the last node J establishes a cross-connection between a client-side port, on the last node J, of the first subpath and the network resource of the link G-J.

Till now, establishment of a cross-domain path whose first node is in the domain 2 and whose last node is in the domain 1 is completed. Therefore, dynamic establishment of a path between networks of different types is implemented.

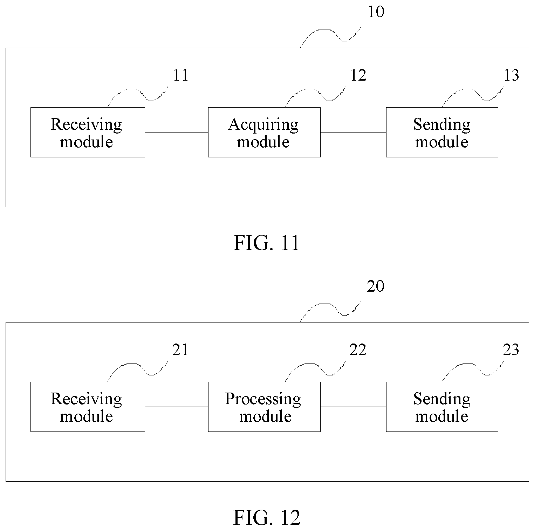

FIG. 11 is a schematic structural diagram of Embodiment 1 of a transport network controller according to the present invention. As shown in FIG. 11, the transport network controller 10 provided in this embodiment may include: a receiving module 11, an acquiring module 12, and a sending module 13.

The receiving module 11 is configured to receive a cross-domain path establishment request, where the cross-domain path establishment request includes first node information, last node information, and bandwidth information of a to-be-established target path, where a first node corresponding to the first node information is located in a first network, and a last node corresponding to the last node information is located in a second network.

The acquiring module 12 is configured to acquire a first subpath, in the first network, of the target path according to topology information and traffic engineering TE information of the first network, where the first subpath is a path between the first node and a first boundary node of the first network; and allocate a network resource to a link between nodes on the first subpath according to the bandwidth information, so that the nodes establish a connection.

The sending module 13 is configured to send a path message to a second boundary node of the second network by using a control channel, so that the second boundary node runs a signaling protocol in a Generalized Multiprotocol Label Switching GMPLS protocol stack according to the path message, to establish a second subpath, in the second network, of the target path, and to complete connecting nodes on the second subpath, where the path message includes a connection identifier allocated to the target path, the first node information, the last node information, and the bandwidth information, and a link between the second boundary node and the first boundary node is a cross-domain link between the first network and the second network.

The receiving module 11 is further configured to: after receiving a network resource that is sent by the second boundary node by using the control channel and that corresponds to the cross-domain link, send an indication message to the first boundary node, where the indication message includes the network resource corresponding to the cross-domain link, and a network resource of a link between the first boundary node and an adjacent node, on the first subpath, of the first boundary node, so that the first boundary node connects the first subpath and the second subpath.

In another implementation manner, the receiving module 11 is further configured to receive shortest paths that are from boundary nodes, connected to the first network, in the second network to the last node, and corresponding costs, where the shortest paths and the corresponding costs are sent by using the control channel by a PCE that is set in the second network; and
correspondingly, the acquiring module 12 is further configured to acquire the first subpath and the second subpath according to the topology information and the TE information of the first network, the shortest paths, and the corresponding costs.

It may be understood that, the path message may further include the second subpath.

Further, the acquiring module 12 may be further configured to: acquire connection identifiers of all paths whose first nodes are in the first network and are the first node corresponding to the first node information and whose last nodes are in the second network; and allocate, to the target path, a connection identifier that is different from the connection identifiers of all the foregoing paths and that uniquely corresponds to the target path.

It may be understood that, when the transport network controller 10 acquires the cross-domain link, specifically, the receiving module 11 may be further configured to receive a start check message that is sent by the second boundary node by using the control channel, where the start check message includes a port identifier of a first port, on a side of the second boundary node, of the cross-domain link;
the sending module 13 may be further configured to return a response message to the second boundary node, where the response message carries a unique corresponding verification identifier allocated to the first boundary node;
the receiving module 11 may be further configured to receive a test message that is sent by the second boundary node by using the first port and that is forwarded by the first boundary node, and a port identifier of a second port that receives the test message, where the test message carries the verification identifier; and
the acquiring module 12 may be further configured to match the first port with the second port according to the verification identifier, to acquire the cross-domain link, and send, to the second boundary node, information about the first port and the second port that have been matched.

During configuring the second boundary node, the acquiring module 12 may be further configured to configure a control plane address, on the second boundary node, of the first boundary node as an address of the transport network controller, to acquire the control channel between the second boundary node and the transport network controller.

The transport network controller provided in this embodiment may be used to execute the technical solutions of the foregoing method embodiments, and has a similar implementation principle and technical effect; details are not described herein again.

FIG. 12 is a schematic structural diagram of Embodiment 1 of a network node according to the present invention. As shown in FIG. 12, the network node 20 provided in this embodiment may include: a receiving module 21, a processing module 22, and a sending module 23.

The receiving module 21 is configured to receive a path message that is sent by using a control channel by a transport network controller that is set in a first network, where the path message includes a connection identifier allocated to a target path, first node information, last node information, and bandwidth information, where the target path is a path that needs to be established as required in a cross-domain path establishment request received by the transport network controller.

The processing module 22 is configured to establish a second subpath, in the second network, of the target path according to the path message, and complete connecting nodes on the second subpath.

The sending module 23 is configured to send a network resource corresponding to a cross-domain link to the transport network controller by using the control channel, so that the transport network controller sends, to a first boundary node of the first network, an indication message that is used to instruct the first boundary node to connect a first subpath in the first network and the second subpath, where the cross-domain link is a link between the second boundary node and the first boundary node.

It may be understood that, during configuring the cross-domain link, specifically, the sending module 23 may be further configured to send a start check message to the transport network controller by using the control channel, where the start check message includes a port identifier of a first port, on a side of the second boundary node, of the cross-domain link;
the receiving module 21 may be further configured to receive a response message returned by the transport network controller, where the response message carries a unique corresponding verification identifier that is allocated to the first boundary node by the transport network controller;
the sending module 23 may be further configured to send a test message to the first boundary node by using the first port, so that the first boundary node forwards the test message to the transport network controller, where the test message carries the verification identifier; and
the receiving module 21 may be further configured to receive information, sent by the transport network controller, about the first port and a second port that have been matched, to acquire the cross-domain path, where the second port is a port by using which the first boundary node receives the test message.

During configuring the second boundary node, the processing module 22 may be further configured to configure a control plane address, on the second boundary node, of the first boundary node as an address of the transport network controller, to acquire the control channel between the second boundary node and the transport network controller.

The network node provided in this embodiment may be used to execute the technical solutions of the foregoing method embodiments, and has a similar implementation principle and technical effect; details are not described herein again.

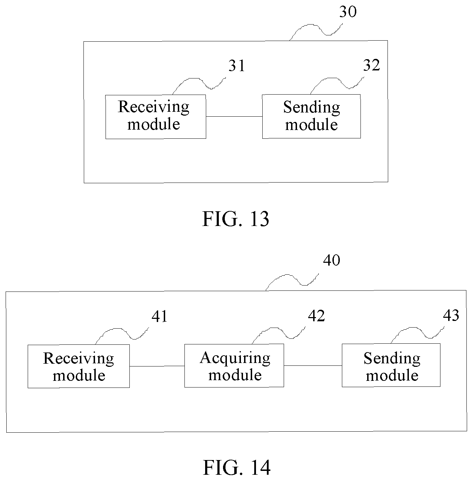

FIG. 13 is a schematic structural diagram of Embodiment 2 of a network node according to the present invention. As shown in FIG. 13, the network node 30 provided in this embodiment may include: a receiving module 31 and a sending module 32.

The receiving module 31 is configured to receive a path message that is sent by a first node of a first network along nodes on a first subpath hop by hop, and forward, by using a control channel, the path message to a transport network controller that is set in a second network, where the path message includes a connection identifier allocated to a target path by the first node, first node information, last node information, and bandwidth information.

Specifically, the path message may further include a second subpath.

The receiving module 31 is further configured to receive a reservation message that is sent by the transport network controller by using the control channel, where the reservation message includes a network resource corresponding to a cross-domain link, the connection identifier, the first node information, the last node information and the bandwidth information.

The sending module 32 is configured to forward the reservation message to the first node along the nodes on the first subpath hop by hop, and complete connecting the nodes on the first subpath, and connection of a link between the first subpath and a second subpath in the second network, where a link between a second boundary node in the second network and the first boundary node is the cross-domain link between the first network and the second network.

The network node provided in this embodiment may be used to execute the technical solutions of the foregoing method embodiments, and has a similar implementation principle and technical effect; details are not described herein again.

FIG. 14 is a schematic structural diagram of Embodiment 2 of a transport network controller according to the present invention. As shown in FIG. 14, the transport network controller 40 provided in this embodiment may include: a receiving module 41, an acquiring module 42, and a sending module 43.

The receiving module 41 is configured to receive a path message that is sent by a first boundary node of a first network by using a control channel, where the path message includes a connection identifier allocated to a target path, first node information, last node information, and bandwidth information, where the target path is a path that needs to be established as required in a cross-domain path establishment request received by a first node.

The acquiring module 42 is configured to acquire a second subpath, in the second network, of the target path according to the path message and topology information and traffic engineering TE information of the second network, where the second subpath is a path between a second boundary node of the second network and a last node corresponding to the last node information; and allocate a network resource to a link between nodes on the second subpath according to the bandwidth information, so that the nodes establish a connection.

The sending module 43 is configured to send a reservation message to the first boundary node of the first network by using the control channel, where the reservation message includes a network resource corresponding to a cross-domain link, the connection identifier, the first node information, the last node information, and the bandwidth information, so that the first boundary node and the first node complete connecting nodes on the first subpath according to the reservation message, where the cross-domain link is a link between the second boundary node and the first boundary node.

In another implementation manner, the path message may further include the second subpath; and
correspondingly, the acquiring module 42 may be specifically configured to allocate the network resource to the link between the nodes on the second subpath according to the second subpath and the bandwidth information in the path message, so that the nodes establish the connection.

It may be understood that, when the transport network controller 40 acquires the cross-domain link, the receiving module 41 may be further configured to receive a start check message that is sent by the first boundary node by using the control channel, where the start check message includes a port identifier of a first port, on a side of the first boundary node, of the cross-domain link;
the sending module 43 may be further configured to return a response message to the first boundary node, where the response message carries a unique corresponding verification identifier allocated to the second boundary node;
the receiving module 41 may be further configured to receive a test message that is sent by the first boundary node by using the first port and that is forwarded by the second boundary node, and a port identifier of a second port that receives the test message, where the test message carries the verification identifier; and
the sending module 43 may be further configured to match the first port with the second port according to the verification identifier, to acquire the cross-domain link, and send, to the first boundary node, information about the first port and the second port that have been matched.

During configuring the second boundary node, the acquiring module 42 may be further configured to configure a control plane address, on the first boundary node, of the second boundary node to be an address of the transport network controller, to acquire the control channel between the first boundary node and the transport network controller.

The transport network controller provided in this embodiment may be used to execute the technical solutions of the foregoing method embodiments, and has a similar implementation principle and technical effect; details are not described herein again.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for establishing a cross-domain path between a first network and a second network, wherein the first network is a transport network based on centralized control, the second network is a transport network based on Generalized Multiprotocol Label Switching, GMPLS, protocol control, comprising:
receiving (101), by a transport network controller that is set in the first network, a cross-domain path establishment request, wherein the cross-domain path establishment request comprises first node information, last node information, and bandwidth information of a to-be-established target path, wherein a first node corresponding to the first node information is located in the first network, and a last node corresponding to the last node information is located in the second network;
acquiring (102), by the transport network controller, a first subpath, in the first network, of the target path according to topology information and traffic engineering, TE, information of the first network, wherein the first subpath is a path between the first node and a first boundary node of the first network; and allocating a network resource to a link between nodes on the first subpath according to the bandwidth information, so that the nodes establish a connection;
sending (103), by the transport network controller, a path message to a second boundary node of the second network by using a control channel, so that the second boundary node runs a signaling protocol in a Generalized Multiprotocol Label Switching, GMPLS, protocol stack according to the path message, to establish a second subpath, in the second network, of the target path, and to complete connecting nodes on the second subpath, wherein the path message comprises a connection identifier allocated to the target path, the first node information, the last node information, and the bandwidth information, and a cross-domain link between the second boundary node and the first boundary node, said cross-domain link being between the first network and the second network; and
after the transport network controller receives a network resource that is sent by the second boundary node by using the control channel and that corresponds to the cross-domain link, sending (104), by the transport network controller, an indication message to the first boundary node, wherein the indication message comprises the network resource corresponding to the cross-domain link, and a network resource of a link between the first boundary node and an adjacent node, on the first subpath, of the first boundary node, so that the first boundary node connects the first subpath and the second subpath;
before the receiving, by a transport network controller set in a first network, a cross-domain path establishment request, further comprising:
receiving (301), by the transport network controller, a start check message that is sent by the second boundary node by using the control channel, wherein the start check message comprises a port identifier of a first port, at a side of the second boundary node, of the cross-domain link;
returning (302), by the transport network controller, a response message to the second boundary node, wherein the response message carries a unique corresponding verification identifier allocated to the first boundary node;
receiving (303), by the transport network controller, a test message that is sent by the second boundary node by using the first port and that is forwarded by the first boundary node, and a port identifier of a second port that receives the test message, wherein the test message carries the verification identifier; and
matching (304), by the transport network controller, the first port with the second port according to the verification identifier, to acquire the cross-domain link, and sending, to the second boundary node, information about the first port and the second port that have been matched.

2. The method according to claim 1, after the receiving, by a transport network controller that is set in the first network, a cross-domain path establishment request, further comprising:
receiving (201), by the transport network controller, shortest paths that are from boundary nodes, connected to the first network, in the second network to the last node, and corresponding costs, wherein the shortest paths and the corresponding costs are sent by using the control channel by a path computation element, PCE, that is set in the second network; and
correspondingly, the acquiring, by the transport network controller, a first subpath, in the first network, of the target path according to topology information and TE information of the first network comprises:
acquiring (202), by the transport network controller, the first subpath and the second subpath according to the topology information and the TE information of the first network, the shortest paths, and the corresponding costs.

3. The method according to claim 2, wherein the path message further comprises the second subpath.

4. A method for establishing a cross-domain path between a first network and a second network, wherein the first network is a transport network based on centralized control, the second network is a transport network based on Generalized Multiprotocol Label Switching, GMPLS, protocol control, comprising:
receiving (401), by a second boundary node in the second network, a path message that is sent by using a control channel by a transport network controller that is set in the first network, wherein the path message comprises a connection identifier allocated to a target path, first node information, last node information, and bandwidth information, wherein the target path is a path that needs to be established as required in a cross-domain path establishment request received by the transport network controller;
establishing (402), by the second boundary node and a last node corresponding to the last node information, a second subpath, in the second network, of the target path according to the path message, and completing connecting nodes on the second subpath; and
sending (403), by the second boundary node, a network resource corresponding to a cross-domain link to the transport network controller by using the control channel, so that the transport network controller sends, to a first boundary node of the first network, an indication message that is used to instruct the first boundary node to connect a first subpath in the first network and the second subpath, wherein the cross-domain link is a link between the second boundary node and the first boundary node;
wherein, before the receiving, by a second boundary node in the second network, a path message that is sent by using a control channel by a transport network controller that is set in the first network, the method further includes:
sending (501), by the second boundary node, a start check message to the transport network controller by using the control channel, where the start check message includes a port identifier of a first port, on a side of the second boundary node, of the cross-domain link;
receiving (502), by the second boundary node, a response message returned by the transport network controller, where the response message carries a unique corresponding verification identifier that is allocated to the first boundary node by the transport network controller;
sending (503), by the second boundary node, a test message to the first boundary node by using the first port, so that the first boundary node forwards the test message to the transport network controller, where the test message carries the verification identifier; and
receiving (504), by the second boundary node, information, sent by the transport network controller, about the first port and a second port that have been matched, to acquire the cross-domain path, where the second port is a port by using which the first boundary node receives the test message.

5. A method for establishing a cross-domain path between a first network and a second network, wherein the first network is a transport network based on Generalized Multiprotocol Label Switching, GMPLS, protocol control and the second network is a transport network based on centralized control, comprising:
receiving (601), by a first boundary node of the first network, a path message that is sent by a first node of the first network along nodes on a first subpath hop by hop, and forwarding, by using a control channel, the path message to a transport network controller that is set in the second network, wherein the path message comprises a connection identifier allocated to a target path by the first node, first node information, last node information, and bandwidth information;
receiving (602), by the first boundary node, a reservation message that is sent by the transport network controller by using the control channel, wherein the reservation message comprises a network resource corresponding to a cross-domain link, the connection identifier, the first node information, the last node information and the bandwidth information; and
forwarding (603), by the first boundary node, the reservation message to the first node along the nodes on the first subpath hop by hop, and completing connecting the nodes on the first subpath, and connecting of a link between the first subpath and a second subpath in the second network, wherein a link between a second boundary node in the second network and the first boundary node is the cross-domain link between the first network and the second network.

6. A method for establishing a cross-domain path between a first network and a second network, wherein the first network is a transport network based on Generalized Multiprotocol Label Switching, GMPLS, protocol control and the second network is a transport network based on centralized control, comprising:
receiving (701), by a transport network controller that is set in the second network, a path message that is sent by a first boundary node of the first network by using a control channel, wherein the path message comprises a connection identifier allocated to a target path, first node information, last node information, and bandwidth information, wherein the target path is a path that needs to be established as required in a cross-domain path establishment request received by a first node;
acquiring (702), by the transport network controller, a second subpath, in the second network, of the target path according to the path message and topology information and traffic engineering, TE, information of the second network, wherein the second subpath is a path between a second boundary node of the second network and a last node corresponding to the last node information; and allocating a network resource to a link between nodes on the second subpath according to the bandwidth information, so that the nodes establish a connection; and
sending (703), by the transport network controller, a reservation message to the first boundary node of the first network by using the control channel, wherein the reservation message comprises a network resource corresponding to a cross-domain link, the connection identifier, the first node information, the last node information, and the bandwidth information, so that the first boundary node and the first node complete connecting nodes on the first subpath according to the reservation message, wherein the cross-domain link is a link between the second boundary node and the first boundary node.

7. The method according to claim 6, wherein the path message further comprises the second subpath; and
correspondingly, the acquiring, by the transport network controller, a second subpath, in the second network, of the target path according to the path message and topology information and TE information of the second network; and allocating a network resource to a link between nodes on the second subpath according to the bandwidth information, so that the nodes establish a connection comprises:
allocating, by the transport network controller, the network resource to the link between the nodes on the second subpath according to the second subpath and the bandwidth information in the path message, so that the nodes establish the connection.

8. A transport network controller (10) adapted for establishing a cross-domain path between a first network and a second network, wherein the first network is a transport network based on centralized control, the second network is a transport network based on Generalized Multiprotocol Label Switching, GMPLS, protocol control, comprising:
a receiving module (11), configured to receive a cross-domain path establishment request, wherein the cross-domain path establishment request comprises first node information, last node information, and bandwidth information of a to-be-established target path, wherein a first node corresponding to the first node information is located in the first network, and a last node corresponding to the last node information is located in the second network;
an acquiring module (12), configured to acquire a first subpath, in the first network, of the target path according to topology information and traffic engineering, TE, information of the first network, wherein the first subpath is a path between the first node and a first boundary node of the first network; and allocate a network resource to a link between nodes on the first subpath according to the bandwidth information, so that the nodes establish a connection; and
a sending module (13), configured to send a path message to a second boundary node of the second network by using a control channel, so that the second boundary node runs a signaling protocol in a Generalized Multiprotocol Label Switching, GMPLS, protocol stack according to the path message, to establish a second subpath, in the second network, of the target path, and to complete connecting nodes on the second subpath, wherein the path message comprises a connection identifier allocated to the target path, the first node information, the last node information, and the bandwidth information, and a cross-domain link between the second boundary node and the first boundary node, said cross-domain link being between the first network and the second network; wherein
the receiving module is further configured to: after receiving a network resource that is sent by the second boundary node by using the control channel and that corresponds to the cross-domain link, send an indication message to the first boundary node, wherein the indication message comprises the network resource corresponding to the cross-domain link, and a network resource of a link between the first boundary node and an adjacent node, on the first subpath, of the first boundary node, so that the first boundary node connects the first subpath and the second subpath;
wherein
the receiving module is further configured to receive a start check message that is sent by the second boundary node by using the control channel, wherein the start check message comprises a port identifier of a first port, at a side of the second boundary node, of the cross-domain link;
the sending module is further configured to return a response message to the second boundary node, wherein the response message carries a unique corresponding verification identifier allocated to the first boundary node;
the receiving module is further configured to receive a test message that is sent by the second boundary node by using the first port and that is forwarded by the first boundary node, and a port identifier of a second port that receives the test message, wherein the test message carries the verification identifier; and
the acquiring module is further configured to match the first port with the second port according to the verification identifier, to acquire the cross-domain link, and send, to the second boundary node, information about the first port and the second port that have been matched.

9. The transport network controller according to claim 8, wherein the receiving module is further configured to:
receive shortest paths that are from boundary nodes, connected to the first network, in the second network to the last node, and corresponding costs, wherein the shortest paths and the corresponding costs are sent by using the control channel by a path computation element, PCE, that is set in the second network; and
correspondingly, the acquiring module is further configured to:
acquire the first subpath and the second subpath according to the topology information and the TE information of the first network, the shortest paths, and the corresponding costs.

10. The transport network controller according to claim 9, wherein the path message further comprises the second subpath.

11. A network node (20) adapted for establishing a cross-domain path between a first network and a second network, wherein the first network is a transport network based on centralized control, the second network is a transport network based on Generalized Multiprotocol Label Switching, GMPLS, protocol control, comprising:
a receiving module (21), configured to receive a path message that is sent by using a control channel by a transport network controller that is set in the first network, wherein the path message comprises a connection identifier allocated to a target path, first node information, last node information, and bandwidth information, wherein the target path is a path that needs to be established as required in a cross-domain path establishment request received by the transport network controller;
a processing module (22), configured to establish a second subpath, in the second network, of the target path according to the path message, and complete connecting nodes on the second subpath; and
a sending module (23), configured to send a network resource corresponding to a cross-domain link to the transport network controller by using the control channel, so that the transport network controller sends, to a first boundary node of the first network, an indication message that is used to instruct the first boundary node to connect a first subpath in the first network and the second subpath, wherein the cross-domain link is a link between the second boundary node and the first boundary node;
wherein
the sending module is further configured to send a start check message to the transport network controller by using the control channel, wherein the start check message comprises a port identifier of a first port, on a side of the second boundary node, of the cross-domain link;
the receiving module is further configured to receive a response message returned by the transport network controller, wherein the response message carries a unique corresponding verification identifier that is allocated to the first boundary node by the transport network controller;
the sending module is further configured to send a test message to the first boundary node by using the first port, so that the first boundary node forwards the test message to the transport network controller, wherein the test message carries the verification identifier; and
the receiving module is further configured to receive information, sent by the transport network controller, about the first port and a second port that have been matched, to acquire the cross-domain path, wherein the second port is a port by using which the first boundary node receives the test message.

12. A network node (30) adapted for establishing a cross-domain path between a first network and a second network, wherein the first network is a transport network based on Generalized Multiprotocol Label Switching, GMPLS, protocol control and the second network is a transport network based on centralized control, comprising:
a receiving module (31), configured to receive a path message that is sent by a first node of the first network along nodes on a first subpath hop by hop, and forward, by using a control channel, the path message to a transport network controller that is set in the second network, wherein the path message comprises a connection identifier allocated to a target path by the first node, first node information, last node information, and bandwidth information; wherein
the receiving module is further configured to receive a reservation message that is sent by the transport network controller by using the control channel, wherein the reservation message comprises a network resource corresponding to a cross-domain link, the connection identifier, the first node information, the last node information and the bandwidth information; and
a sending module (32), configured to forward the reservation message to the first node along the nodes on the first subpath hop by hop, and complete connecting the nodes on the first subpath, and connecting of a link between the first subpath and a second subpath in the second network, wherein a link between a second boundary node in the second network and the first boundary node is the cross-domain link between the first network and the second network.

13. A transport network controller (40) adapted for establishing a cross-domain path between a first network and a second network, wherein the first network is a transport network based on Generalized Multiprotocol Label Switching, GMPLS, protocol control and the second network is a transport network based on centralized control, comprising:
a receiving module (41), configured to receive a path message that is sent by a first boundary node of the first network by using a control channel, wherein the path message comprises a connection identifier allocated to a target path, first node information, last node information, and bandwidth information, wherein the target path is a path that needs to be established as required in a cross-domain path establishment request received by a first node;
an acquiring module (42), configured to acquire a second subpath, in the second network, of the target path according to the path message and topology information and traffic engineering, TE, information of the second network, wherein the second subpath is a path between a second boundary node of the second network and a last node corresponding to the last node information; and allocate a network resource to a link between nodes on the second subpath according to the bandwidth information, so that the nodes establish a connection; and
a sending module (43), configured to send a reservation message to the first boundary node of the first network by using the control channel, wherein the reservation message comprises a network resource corresponding to a cross-domain link, the connection identifier, the first node information, the last node information, and the bandwidth information, so that the first boundary node and the first node complete connecting nodes on the first subpath according to the reservation message, wherein the cross-domain link is a link between the second boundary node and the first boundary node.

14. The transport network controller according to claim 13, wherein the path message further comprises the second subpath; and
correspondingly, the acquiring module is specifically configured to allocate the network resource to the link between the nodes on the second subpath according to the second subpath and the bandwidth information in the path message, so that the nodes establish the connection.

## Patentansprüche

1. Verfahren zum Aufbauen eines domänenübergreifenden Pfads zwischen einem ersten Netz und einem zweiten Netz, wobei das erste Netz ein Transportnetz ist, das auf einer zentralisierten Steuerung basiert, das zweite Netz ein Transportnetz ist, das auf einer Protokollsteuerung der verallgemeinerten Mehrprotokoll-Etikettvermittlung, GMPLS-Protokollsteuerung, basiert, das Folgendes umfasst:
Empfangen (101) durch eine Transportnetzsteuereinheit, die in dem ersten Netz eingestellt ist, einer Aufbauanforderung für einen domänenübergreifenden Pfad, wobei die Aufbauanforderung für den domänenübergreifenden Pfad Informationen über einen ersten Knoten, Informationen über einen letzten Knoten und Bandbreiteninformationen eines aufzubauenden Zielpfads umfasst, wobei sich ein erster Knoten, der den Informationen über den ersten Knoten entspricht, in dem ersten Netz befindet und sich ein letzter Knoten, der den Informationen über den letzten Knoten entspricht, in dem zweiten Netz befindet;
Erfassen (102) durch die Transportnetzsteuereinheit eines ersten Teilpfads in dem ersten Netz des Zielpfads gemäß Topologieinformationen und Verkehrsplanungs-Informationen, TE-Informationen, des ersten Netzes, wobei der erste Teilpfad ein Pfad zwischen dem ersten Knoten und einem ersten Grenzknoten des ersten Netzes ist; und Zuweisen eines Netzbetriebsmittels zu einer Strecke zwischen Knoten auf dem ersten Teilpfad gemäß den Bandbreiteninformationen, so dass die Knoten eine Verbindung aufbauen;
Senden (103) durch die Transportnetzsteuereinheit einer Pfadnachricht zu einem zweiten Grenzknoten des zweiten Netzes unter Verwendung eines Steuerkanals, so dass der zweite Grenzknoten ein Signalisierungsprotokoll in einem Protokoll-Stack der verallgemeinerten Mehrprotokoll-Etikettvermittlung, GMPLS-Protokoll-Stack, gemäß der Pfadnachricht ablaufen lässt, um einen zweiten Teilpfad in dem zweiten Netz des Zielpfads aufzubauen und das Verbinden der Knoten auf dem zweiten Teilpfad fertigzustellen, wobei die Pfadnachricht einen Verbindungsbezeichner, der dem Zielpfad zugewiesen ist, die Informationen über den ersten Knoten, die Informationen über den letzten Knoten und die Bandbreiteninformationen und eine domänenübergreifende Strecke zwischen dem zweiten Grenzknoten und dem ersten Grenzknoten umfasst, wobei die domänenübergreifende Strecke zwischen dem ersten Netz und dem zweiten Netz ist; und
nachdem die Transportnetzsteuereinheit ein Netzbetriebsmittel empfängt, das durch den zweiten Grenzknoten unter Verwendung des Steuerkanals gesendet wird und das der domänenübergreifenden Strecke entspricht, Senden (104) durch die Transportnetzsteuereinheit einer Angabenachricht zu dem ersten Grenzknoten, wobei die Angabenachricht das Netzbetriebsmittel, das der domänenübergreifenden Strecke entspricht, und ein Netzbetriebsmittel einer Strecke zwischen dem ersten Grenzknoten und einem benachbarten Knoten auf dem ersten Teilpfad des ersten Grenzknotens umfasst, so dass der erste Grenzknoten den ersten Teilpfad und den zweiten Teilpfad verbindet;
vor dem Empfangen durch eine Transportnetzsteuereinheit, die in einem ersten Netz eingestellt ist, einer Aufbauanforderung für einen domänenübergreifenden Pfad ferner Folgendes umfasst:
Empfangen (301) durch die Transportnetzsteuereinheit einer Startprüfnachricht, die durch den zweiten Grenzknoten unter Verwendung des Steuerkanals gesendet wird, wobei die Startprüfnachricht einen Anschlussbezeichner eines ersten Anschlusses auf einer Seite des zweiten Grenzknotens der domänenübergreifenden Strecke umfasst; Zurückgeben (302) durch die Transportnetzsteuereinheit einer Antwortnachricht zu dem zweiten Grenzknoten, wobei die Antwortnachricht einen eindeutigen entsprechenden Verifikationsbezeichner, der dem ersten Grenzknoten zugewiesen ist, umfasst;
Empfangen (303) durch die Transportnetzsteuereinheit einer Testnachricht, die durch den zweiten Grenzknoten unter Verwendung des ersten Anschlusses gesendet wird und die durch den ersten Grenzknoten weitergeleitet wird, und eines Anschlussbezeichners eines zweiten Anschlusses, der die Testnachricht empfängt, wobei die Testnachricht den Verifikationsbezeichner führt; und
Abstimmen (304) durch die Transportnetzsteuereinheit des ersten Anschlusses mit dem zweiten Anschluss gemäß dem Verifikationsbezeichner, um die domänenübergreifende Strecke zu erfassen, und Senden zu dem zweiten Grenzknoten Informationen über den ersten Anschluss und den zweiten Anschluss, die abgestimmt worden sind.

2. Verfahren nach Anspruch 1, das nach dem Empfangen durch eine Transportnetzsteuereinheit, die in dem ersten Netz eingestellt ist, einer Aufbauanforderung für einen domänenübergreifenden Pfad ferner Folgendes umfasst:
Empfangen (201) durch die Transportnetzsteuereinheit kürzester Pfade, die von Grenzknoten, die mit dem ersten Netz verbunden sind, in dem zweiten Netz zu dem letzten Knoten sind, und entsprechender Aufwände, wobei die kürzesten Pfade und die entsprechenden Aufwände unter Verwendung des Steuerkanals durch ein Pfadberechnungselement, PCE, das in dem zweiten Netz eingestellt ist, gesendet werden; und
dementsprechend das Erfassen durch die Transportnetzsteuereinheit eines ersten Teilpfads in dem ersten Netz des Zielpfads gemäß den Topologieinformationen und TE-Informationen des ersten Netzes Folgendes umfasst:
Erfassen (202) durch die Transportnetzsteuereinheit des ersten Teilpfads und des zweiten Teilpfads gemäß den Topologieinformationen und den TE-Informationen des ersten Netzes, den kürzesten Pfaden und den entsprechenden Aufwänden.

3. Verfahren nach Anspruch 2, wobei die Pfadnachricht ferner den zweiten Teilpfad umfasst.

4. Verfahren zum Aufbauen eines domänenübergreifenden Pfads zwischen einem ersten Netz und einem zweiten Netz, wobei das erste Netz ein Transportnetz ist, das auf einer zentralisierten Steuerung basiert, das zweite Netz ein Transportnetz ist, das auf einer Protokollsteuerung der verallgemeinerten Mehrprotokoll-Etikettvermittlung, GMPLS-Protokollsteuerung, basiert, das Folgendes umfasst:
Empfangen (401) durch einen zweiten Grenzknoten in dem zweiten Netz einer Pfadnachricht, die unter Verwendung eines Steuerkanals durch eine Transportnetzsteuereinheit, die in dem ersten Netz eingestellt ist, gesendet wird, wobei die Pfadnachricht einen Verbindungsbezeichner, der einem Zielpfad zugewiesen ist, Informationen über den ersten Knoten, Informationen über den letzten Knoten und Bandbreiteninformationen umfasst, wobei der Zielpfad ein Pfad ist, der aufgebaut werden muss, wie in einer Aufbauanforderung für einen domänenübergreifenden Pfad, die durch die Transportnetzsteuereinheit empfangen wird, angefordert ist;
Aufbauen (402) durch den zweiten Grenzknoten und einen letzten Knoten, der den Informationen über den letzten Knoten entspricht, eines zweiten Teilpfads in dem zweiten Netz des Zielpfads gemäß der Pfadnachricht und Fertigstellen des Verbindens von Knoten auf dem zweiten Teilpfad; und
Senden (403) durch den zweiten Grenzknoten eines Netzbetriebsmittels, das einer domänenübergreifenden Strecke entspricht, zu der Transportnetzsteuereinheit unter Verwendung des Steuerkanals, so dass die Transportnetzsteuereinheit eine Angabenachricht zu einem ersten Grenzknoten des ersten Netzes sendet, die verwendet wird, um den ersten Grenzknoten anzuweisen, einen ersten Teilpfad in dem ersten Netz und den zweiten Teilpfad zu verbinden, wobei die domänenübergreifende Strecke eine Strecke zwischen dem zweiten Grenzknoten und dem ersten Grenzknoten ist;
wobei das Verfahren vor dem Empfangen durch einen zweiten Grenzknoten in dem zweiten Netz einer Pfadnachricht, die unter Verwendung eines Steuerkanals durch eine Transportnetzsteuereinheit, die in dem ersten Netz eingestellt ist, gesendet wird, ferner Folgendes umfasst:
Senden (501) durch den zweiten Grenzknoten einer Startprüfnachricht zu der Transportnetzsteuereinheit unter Verwendung des Steuerkanals, wobei die Startprüfnachricht einen Anschlussbezeichner eines ersten Anschlusses auf einer Seite des zweiten Grenzknotens der domänenübergreifenden Strecke enthält;
Empfangen (502) durch den zweiten Grenzknoten einer Antwortnachricht, die durch die Transportnetzsteuereinheit zurückgegeben wird, wobei die Antwortnachricht einen eindeutigen entsprechenden Verifikationsbezeichner führt, der dem ersten Grenzknoten durch die Transportnetzsteuereinheit zugewiesen ist;
Senden (503) durch den zweiten Grenzknoten einer Testnachricht zu dem ersten Grenzknoten unter Verwendung des ersten Anschlusses, so dass der erste Grenzknoten die Testnachricht zu der Transportnetzsteuereinheit weiterleitet, wobei die Testnachricht den Verifikationsbezeichner führt; und
Empfangen (504) durch den zweiten Grenzknoten von Informationen, die durch die Transportnetzsteuereinheit gesendet werden, über den ersten Anschluss und einen zweiten Anschluss, die abgestimmt worden sind, um den domänenübergreifenden Pfad zu erfassen, wobei der zweite Anschluss ein Anschluss ist, unter dessen Verwendung der erste Grenzknoten die Testnachricht empfängt.

5. Verfahren zum Aufbauen eines domänenübergreifenden Pfads zwischen einem ersten Netz und einem zweiten Netz, wobei das erste Netz ein Transportnetz ist, das auf der Protokollsteuerung der verallgemeinerten Mehrprotokoll-Etikettvermittlung, GMPLS-Protokollsteuerung, basiert, und das zweite Netz ein Transportnetz ist, das auf zentralisierter Steuerung basiert, das Folgendes umfasst:
Empfangen (601) durch einen ersten Grenzknoten des ersten Netzes einer Pfadnachricht, die durch einen ersten Knoten des ersten Netzes entlang Knoten auf einem ersten Teilpfad Sprung für Sprung gesendet wird, und Weiterleiten unter Verwendung eines Steuerkanals der Pfadnachricht zu einer Transportnetzsteuereinheit, die in dem zweiten Netz eingestellt ist, wobei die Pfadnachricht einen Verbindungsbezeichner, der einem Zielpfad durch den ersten Knoten zugewiesen ist, Informationen über den ersten Knoten, Informationen über den letzten Knoten und Bandbreiteninformationen umfasst;
Empfangen (602) durch den ersten Grenzknoten einer Reservierungsnachricht, die durch die Transportnetzsteuereinheit unter Verwendung des Steuerkanals gesendet wird, wobei die Reservierungsnachricht ein Netzbetriebsmittel, das einer domänenübergreifenden Strecke entspricht, den Verbindungsbezeichner, die Informationen über den ersten Knoten, die Informationen über den letzten Knoten und Bandbreiteninformationen umfasst; und
Weiterleiten (603) durch den ersten Grenzknoten der Reservierungsnachricht zu dem ersten Knoten entlang den Knoten auf dem ersten Teilpfad Sprung für Sprung und Fertigstellen des Verbindens der Knoten auf dem ersten Teilpfad und Verbinden einer Strecke zwischen dem ersten Teilpfad und einem zweiten Teilpfad in dem zweiten Netz, wobei eine Strecke zwischen einem zweiten Grenzknoten in dem zweiten Netz und dem ersten Grenzknoten die domänenübergreifende Strecke zwischen dem ersten Netz und dem zweiten Netz ist.

6. Verfahren zum Aufbauen eines domänenübergreifenden Pfads zwischen einem ersten Netz und einem zweiten Netz, wobei das erste Netz ein Transportnetz ist, das auf der Protokollsteuerung der verallgemeinerten Mehrprotokoll-Etikettvermittlung, GMPLS-Protokollsteuerung, basiert, und das zweite Netz ein Transportnetz ist, das auf zentralisierter Steuerung basiert, das Folgendes umfasst:
Empfangen (701) durch eine Transportnetzsteuereinheit, die in dem zweiten Netz eingestellt ist, einer Pfadnachricht, die durch einen ersten Grenzknoten des ersten Netzes unter Verwendung eines Steuerkanals gesendet wird, wobei die Pfadnachricht einen Verbindungsbezeichner, der einem Zielpfad zugewiesen ist, Informationen über einen ersten Knoten, Informationen über einen letzten Knoten und Bandbreiteninformationen umfasst, wobei der Zielpfad ein Pfad ist, der aufgebaut werden muss, wie in einer Aufbauanforderung für einen domänenübergreifenden Pfad, die durch einen ersten Knoten empfangen wird, angefordert ist;
Erfassen (702) durch die Transportnetzsteuereinheit eines zweiten Teilpfads in dem zweiten Netz des Zielpfads gemäß der Pfadnachricht und Topologieinformationen und Verkehrsplanungs-Informationen, TE-Informationen, des zweiten Netzes, wobei der zweite Teilpfad ein Pfad zwischen einem zweiten Grenzknoten des zweiten Netzes und einem letzten Knoten, der den Informationen über den letzten Knoten entspricht, ist; und Zuweisen eines Netzbetriebsmittels zu einer Strecke zwischen Knoten auf dem zweiten Teilpfad gemäß den Bandbreiteninformationen, so dass die Knoten eine Verbindung aufbauen; und
Senden (703) durch die Transportnetzsteuereinheit einer Reservierungsnachricht zu dem ersten Grenzknoten des ersten Netzes unter Verwendung des Steuerkanals, wobei die Reservierungsnachricht ein Netzbetriebsmittel, das einer domänenübergreifenden Strecke entspricht, den Verbindungsbezeichner, die Informationen über den ersten Knoten, die Informationen über den letzten Knoten und die Bandbreiteninformationen umfasst, so dass der erste Grenzknoten und der erste Knoten das Verbinden von Knoten auf dem ersten Teilpfad gemäß der Reservierungsnachricht fertigstellen, wobei die domänenübergreifende Strecke eine Strecke zwischen dem zweiten Grenzknoten und dem ersten Grenzknoten ist.

7. Verfahren nach Anspruch 6, wobei die Pfadnachricht ferner den zweiten Teilpfad umfasst; und
dementsprechend das Erfassen durch die Transportnetzsteuereinheit eines zweiten Teilpfads in dem zweiten Netz des Zielpfads gemäß der Pfadnachricht und Topologieinformationen und TE-Informationen des zweiten Netzes; und Zuweisen eines Netzbetriebsmittels zu einer Strecke zwischen Knoten auf dem zweiten Teilpfad gemäß den Bandbreiteninformationen, so dass die Knoten eine Verbindung aufbauen, Folgendes umfasst:
Zuweisen durch die Transportnetzsteuereinheit des Netzbetriebsmittels zu der Strecke zwischen den Knoten auf dem zweiten Teilpfad gemäß dem zweiten Teilpfad und den Bandbreiteninformationen in der Pfadnachricht, so dass die Knoten die Verbindung aufbauen.

8. Transportnetzsteuereinheit (10), die zum Aufbauen eines domänenübergreifenden Pfads zwischen einem ersten Netz und einem zweiten Netz ausgelegt ist, wobei das erste Netz ein Transportnetz ist, das auf einer zentralisierten Steuerung basiert, das zweite Netz ein Transportnetz ist, das auf einer Protokollsteuerung der verallgemeinerten Mehrprotokoll-Etikettvermittlung, GMPLS-Protokollsteuerung, basiert, die Folgendes umfasst:
ein Empfangsmodul (11), das konfiguriert ist, eine Aufbauanforderung für einen domänenübergreifenden Pfad zu empfangen, wobei die Aufbauanforderung für den domänenübergreifenden Pfad Informationen über einen ersten Knoten, Informationen über einen letzten Knoten und Bandbreiteninformationen eines aufzubauenden Zielpfads umfasst, wobei sich ein erster Knoten, der den Informationen über den ersten Knoten entspricht, in dem ersten Netz befindet und sich ein letzter Knoten, der den Informationen über den letzten Knoten entspricht, in dem zweiten Netz befindet; ein Erfassungsmodul (12), das konfiguriert ist, einen ersten Teilpfad in dem ersten Netz des Zielpfads gemäß Topologieinformationen und Verkehrsplanungs-Informationen, TE-Informationen, des ersten Netzes zu erfassen, wobei der erste Teilpfad ein Pfad zwischen dem ersten Knoten und einem ersten Grenzknoten des ersten Netzes ist; und ein Netzbetriebsmittel einer Strecke zwischen Knoten auf dem ersten Teilpfad gemäß den Bandbreiteninformationen zuzuweisen, so dass die Knoten eine Verbindung aufbauen; und
ein Sendemodul (13), das konfiguriert ist, eine Pfadnachricht zu einem zweiten Grenzknoten des zweiten Netzes unter Verwendung eines Steuerkanals zu senden, so dass der zweite Grenzknoten ein Signalisierungsprotokoll in einem Protokoll-Stack der verallgemeinerten Mehrprotokoll-Etikettvermittlung, GMPLS-Protokoll-Stack, gemäß der Pfadnachricht ablaufen lässt, um einen zweiten Teilpfad in dem zweiten Netz des Zielpfads aufzubauen und das Verbinden der Knoten auf dem zweiten Teilpfad fertigzustellen, wobei die Pfadnachricht einen Verbindungsbezeichner, der dem Zielpfad zugewiesen ist, die Informationen über den ersten Knoten, die Informationen über den letzten Knoten und die Bandbreiteninformationen und eine domänenübergreifende Strecke zwischen dem zweiten Grenzknoten und dem ersten Grenzknoten umfasst, wobei die domänenübergreifende Strecke zwischen dem ersten Netz und dem zweiten Netz ist; wobei
das Empfangsmodul ferner konfiguriert ist zum: nach dem Empfangen eines Netzbetriebsmittels, das durch den zweiten Grenzknoten unter Verwendung des Steuerkanals gesendet wird und das der domänenübergreifenden Strecke entspricht, eine Angabenachricht zu dem ersten Grenzknoten zu senden, wobei die Angabenachricht das Netzbetriebsmittel, das der domänenübergreifenden Strecke entspricht, und ein Netzbetriebsmittel einer Strecke zwischen dem ersten Grenzknoten und einem benachbarten Knoten auf dem ersten Teilpfad des ersten Grenzknotens umfasst, so dass der erste Grenzknoten den ersten Teilpfad und den zweiten Teilpfad verbindet;
wobei
das Empfangsmodul ferner konfiguriert ist, eine Startprüfnachricht, die durch den zweiten Grenzknoten unter Verwendung des Steuerkanals gesendet wird, zu empfangen, wobei die Startprüfnachricht einen Anschlussbezeichner eines ersten Anschlusses auf einer Seite des zweiten Grenzknotens der domänenübergreifenden Strecke umfasst;
das Sendemodul ferner konfiguriert ist, eine Antwortnachricht zu dem zweiten Grenzknoten zurückzugeben, wobei die Antwortnachricht einen eindeutigen entsprechenden Verifikationsbezeichner umfasst, der dem ersten Grenzknoten zugewiesen ist;
das Empfangsmodul ferner konfiguriert ist, eine Testnachricht, die durch den zweiten Grenzknoten unter Verwendung des ersten Anschlusses gesendet wird und die durch den ersten Grenzknoten weitergeleitet wird, und einen Anschlussbezeichner eines zweiten Anschlusses, der die Testnachricht empfängt, zu empfangen, wobei die Testnachricht den Verifikationsbezeichner führt; und
das Erfassungsmodul ferner konfiguriert ist, den ersten Anschluss mit dem zweiten Anschluss gemäß dem Verifikationsbezeichner abzustimmen, um die domänenübergreifende Strecke zu erfassen, und zu dem zweiten Grenzknoten Informationen über den ersten Anschluss und den zweiten Anschluss, die abgestimmt worden sind, zu senden.

9. Transportnetzsteuereinheit nach Anspruch 8, wobei das Empfangsmodul ferner konfiguriert ist zum:
Empfangen kürzester Pfade, die von den Grenzknoten, die mit dem ersten Netz verbunden sind, in dem zweiten Netz zu dem letzten Knoten sind, und entsprechender Aufwände, wobei die kürzesten Pfade und die entsprechenden Aufwände unter Verwendung des Steuerkanals durch ein Pfadberechnungselement, PCE, das in dem zweiten Netz eingestellt ist, gesendet werden; und dementsprechend das Erfassungsmodul ferner konfiguriert ist zum:
Erfassen des ersten Teilpfads und des zweiten Teilpfads gemäß den Topologieinformationen und den TE-Informationen des ersten Netzes, den kürzesten Pfaden und den entsprechenden Aufwänden.

10. Transportnetzsteuereinheit nach Anspruch 9, wobei die Pfadnachricht ferner den zweiten Teilpfad umfasst.

11. Netzknoten (20), der zum Aufbauen eines domänenübergreifenden Pfads zwischen einem ersten Netz und einem zweiten Netz ausgelegt ist, wobei das erste Netz ein Transportnetz ist, das auf einer zentralisierten Steuerung basiert, das zweite Netz ein Transportnetz ist, das auf einer Protokollsteuerung der verallgemeinerten Mehrprotokoll-Etikettvermittlung, GMPLS-Protokollsteuerung, basiert, der Folgendes umfasst:
ein Empfangsmodul (21), das konfiguriert ist, eine Pfadnachricht zu empfangen, die unter Verwendung eines Steuerkanals durch eine Transportnetzsteuereinheit, die in dem ersten Netz eingestellt ist, gesendet wird, wobei die Pfadnachricht einen Verbindungsbezeichner, der einem Zielpfad zugewiesen ist, Informationen über einen ersten Knoten, Informationen über einen letzten Knoten und Bandbreiteninformationen umfasst, wobei der Zielpfad ein Pfad ist, der aufgebaut werden muss, wie in einer Aufbauanforderung für einen domänenübergreifenden Pfad, die durch die Transportnetzsteuereinheit empfangen wird, angefordert ist;
ein Verarbeitungsmodul (22), das konfiguriert ist, einen zweiten Teilpfad in dem zweiten Netz des Zielpfads gemäß der Pfadnachricht aufzubauen und das Verbinden von Knoten auf dem zweiten Teilpfad fertigzustellen; und
ein Sendemodul (23), das konfiguriert ist, ein Netzbetriebsmittel, das einer domänenübergreifenden Strecke entspricht, zu der Transportnetzsteuereinheit unter Verwendung des Steuerkanals zu senden, so dass die Transportnetzsteuereinheit eine Angabenachricht zu einem ersten Grenzknoten des ersten Netzes sendet, die verwendet wird, um den ersten Grenzknoten anzuweisen, einen ersten Teilpfad in dem ersten Netz und den zweiten Teilpfad zu verbinden, wobei die domänenübergreifende Strecke eine Strecke zwischen dem zweiten Grenzknoten und dem ersten Grenzknoten ist;
wobei
das Sendemodul ferner konfiguriert ist, eine Startprüfnachricht zu der Transportnetzsteuereinheit unter Verwendung des Steuerkanals zu senden, wobei die Startprüfnachricht einen Anschlussbezeichner eines ersten Anschlusses auf einer Seite des zweiten Grenzknotens der domänenübergreifenden Strecke umfasst;
das Empfangsmodul ferner konfiguriert ist, eine Antwortnachricht, die durch die Transportnetzsteuereinheit zurückgegeben wird, zu empfangen, wobei die Antwortnachricht einen eindeutigen entsprechenden Verifikationsbezeichner führt, der dem ersten Grenzknoten durch die Transportnetzsteuereinheit zugewiesen ist;
das Sendemodul ferner konfiguriert ist, eine Testnachricht zu dem ersten Grenzknoten unter Verwendung des ersten Anschlusses zu senden, so dass der erste Grenzknoten die Testnachricht zu der Transportnetzsteuereinheit weiterleitet, wobei die Testnachricht den Verifikationsbezeichner führt; und
das Empfangsmodul ferner konfiguriert ist, Informationen, die durch die Transportnetzsteuereinheit gesendet werden, über den ersten Anschluss und einen zweiten Anschluss, die abgestimmt worden sind, zu empfangen, um den domänenübergreifenden Pfad zu erfassen, wobei der zweite Anschluss ein Anschluss ist, unter dessen Verwendung der erste Grenzknoten die Testnachricht empfängt.

12. Netzknoten (30), der zum Aufbauen eines domänenübergreifenden Pfads zwischen einem ersten Netz und einem zweiten Netz ausgelegt ist, wobei das erste Netz ein Transportnetz ist, das auf einer Protokollsteuerung der verallgemeinerten Mehrprotokoll-Etikettvermittlung, GMPLS-Protokollsteuerung, basiert, und das zweite Netz ein Transportnetz ist, das auf zentralisierter Steuerung basiert, der Folgendes umfasst:
ein Empfangsmodul (31), das konfiguriert ist, eine Pfadnachricht, die durch einen ersten Knoten des ersten Netzes entlang Knoten auf einem ersten Teilpfad Sprung für Sprung gesendet wird, zu empfangen und unter Verwendung eines Steuerkanals die Pfadnachricht zu einer Transportnetzsteuereinheit, die in dem zweiten Netz eingestellt ist, weiterzuleiten, wobei die Pfadnachricht einen Verbindungsbezeichner, der einem Zielpfad durch den ersten Knoten zugewiesen ist, Informationen über den ersten Knoten, Informationen über den letzten Knoten und Bandbreiteninformationen umfasst; wobei
das Empfangsmodul ferner konfiguriert ist, eine Reservierungsnachricht zu empfangen, die durch die Transportnetzsteuereinheit unter Verwendung des Steuerkanals gesendet wird, wobei die Reservierungsnachricht ein Netzbetriebsmittel, das einer domänenübergreifenden Strecke entspricht, den Verbindungsbezeichner, die Informationen über den ersten Knoten, die Informationen über den letzten Knoten und Bandbreiteninformationen umfasst; und
ein Sendemodul (32), das konfiguriert ist, die Reservierungsnachricht zu dem ersten Knoten entlang den Knoten auf dem ersten Teilpfad Sprung für Sprung weiterzuleiten und das Verbinden der Knoten auf dem ersten Teilpfad und Verbinden einer Strecke zwischen dem ersten Teilpfad und einem zweiten Teilpfad in dem zweiten Netz fertigzustellen, wobei eine Strecke zwischen einem zweiten Grenzknoten in dem zweiten Netz und dem ersten Grenzknoten die domänenübergreifende Strecke zwischen dem ersten Netz und dem zweiten Netz ist.

13. Transportnetzsteuereinheit (40), die zum Aufbauen eines domänenübergreifenden Pfads zwischen einem ersten Netz und einem zweiten Netz ausgelegt ist, wobei das erste Netz ein Transportnetz ist, das auf der Protokollsteuerung der verallgemeinerten Mehrprotokoll-Etikettvermittlung, GMPLS-Protokollsteuerung, basiert, und das zweite Netz ein Transportnetz ist, das auf zentralisierter Steuerung basiert, die Folgendes umfasst:
ein Empfangsmodul (41), das konfiguriert ist, eine Pfadnachricht, die durch einen ersten Grenzknoten des ersten Netzes unter Verwendung eines Steuerkanals gesendet wird, zu empfangen, wobei die Pfadnachricht einen Verbindungsbezeichner, der einem Zielpfad zugewiesen ist, Informationen über einen ersten Knoten, Informationen über einen letzten Knoten und Bandbreiteninformationen umfasst, wobei der Zielpfad ein Pfad ist, der aufgebaut werden muss wie in einer Aufbauanforderung für einen domänenübergreifenden Pfad, die durch einen ersten Knoten empfangen wird, angefordert ist;
ein Erfassungsmodul (42), das konfiguriert ist, einen zweiten Teilpfad in dem zweiten Netz des Zielpfads gemäß der Pfadnachricht und Topologieinformationen und Verkehrsplanungs-Informationen, TE-Informationen, des zweiten Netzes zu erfassen, wobei der zweite Teilpfad ein Pfad zwischen einem zweiten Grenzknoten des zweiten Netzes und einem letzten Knoten, der den Informationen über den letzten Knoten entspricht, ist; und ein Netzbetriebsmittel einer Strecke zwischen Knoten auf dem zweiten Teilpfad gemäß den Bandbreiteninformationen zuzuweisen, so dass die Knoten eine Verbindung aufbauen; und
ein Sendemodul (43), das konfiguriert ist, eine Reservierungsnachricht zu dem ersten Grenzknoten des ersten Netzes unter Verwendung des Steuerkanals zu senden, wobei die Reservierungsnachricht ein Netzbetriebsmittel, das einer domänenübergreifenden Strecke entspricht, den Verbindungsbezeichner, die Informationen über den ersten Knoten, die Informationen über den letzten Knoten und die Bandbreiteninformationen umfasst, so dass der erste Grenzknoten und der erste Knoten das Verbinden von Knoten auf dem ersten Teilpfad gemäß der Reservierungsnachricht fertigstellen, wobei die domänenübergreifende Strecke eine Strecke zwischen dem zweiten Grenzknoten und dem ersten Grenzknoten ist.

14. Transportnetzsteuereinheit nach Anspruch 13, wobei die Pfadnachricht ferner den zweiten Teilpfad umfasst; und
dementsprechend das Erfassungsmodul insbesondere konfiguriert ist, das Netzbetriebsmittel der Strecke zwischen den Knoten auf dem zweiten Teilpfad gemäß dem zweiten Teilpfad und den Bandbreiteninformationen in der Pfadnachricht zuzuweisen, so dass die Knoten die Verbindung aufbauen.

## Revendications

1. Procédé pour établir un chemin inter-domaines entre un premier réseau et un second réseau, dans lequel le premier réseau est un réseau de transport basé sur une commande centralisée, le second réseau est un réseau de transport basé sur une commande de protocole de commutation multiprotocole avec étiquette généralisée, GMPLS, comprenant de :
recevoir (101), par un contrôleur de réseau de transport qui est établi dans le premier réseau, une demande d'établissement de chemin inter-domaines, dans lequel la demande d'établissement de chemin inter-domaines comprend des informations de premier noeud, des informations de dernier noeud, et des informations de bande passante d'un chemin cible à établir, dans lequel un premier noeud correspondant aux informations de premier noeud est situé dans le premier réseau, et un dernier noeud correspondant aux informations de dernier noeud est situé dans le second réseau ;
acquérir (102), par le contrôleur de réseau de transport, un premier sous-chemin, dans le premier réseau, du chemin cible en fonction d'informations de topologie et d'informations d'ingénierie de trafic, TE, du premier réseau, dans lequel le premier sous-chemin est un chemin entre le premier noeud et un premier noeud limite du premier réseau ; et allouer une ressource de réseau à une liaison entre des noeuds sur le premier sous-chemin en fonction des informations de bande passante, de sorte que les noeuds établissent une connexion ;
envoyer (103), par le contrôleur de réseau de transport, un message de chemin à un second noeud limite du second réseau en utilisant un canal de commande, de sorte que le second noeud limite exécute un protocole de signalisation dans une pile de protocoles de commutation multiprotocole avec étiquette généralisée, GMPLS, en fonction du message de chemin, pour établir un second sous-chemin, dans le second réseau, du chemin cible, et pour compléter la connexion de noeuds sur le second sous-chemin, dans lequel le message de chemin comprend un identificateur de connexion attribué au chemin cible, les informations de premier noeud, les informations de dernier noeud, et les informations de bande passante, et une liaison inter-domaines entre le second noeud limite et le premier noeud limite, ladite liaison inter-domaines étant située entre le premier réseau et le second réseau ; et
après que le contrôleur de réseau de transport a reçu une ressource de réseau qui est envoyée par le second noeud limite en utilisant le canal de commande et qui correspond à la liaison inter-domaines, envoyer (104), par le contrôleur de réseau de transport, un message d'indication au premier noeud limite, dans lequel le message d'indication comprend la ressource de réseau correspondant à la liaison inter-domaines, et une ressource de réseau d'une liaison entre le premier noeud limite et un premier noeud adjacent, sur le premier sous-chemin, du premier noeud limite, de sorte qu'un premier noeud limite relie le premier sous-chemin et le second sous-chemin ;
avant la réception, par un contrôleur de réseau de transport établi dans un premier réseau, d'une demande d'établissement de chemin inter-domaines, comprenant en outre de :
recevoir (301), par le contrôleur de réseau de transport, un message de contrôle de départ envoyé par le second noeud limite en utilisant le canal de commande, dans lequel le message de contrôle de départ comprend un identificateur de port d'un premier port, d'un côté du second noeud limite, de la liaison inter-domaines ;
renvoyer (302), par le contrôleur de réseau de transport, un message de réponse au second noeud limite, dans lequel le message de réponse contient un identificateur de vérification correspondant unique attribué au premier noeud limite ;
recevoir (303), par le contrôleur de réseau de transport, un message de test qui est envoyé par le second noeud limite en utilisant le premier port et qui est transmis par le premier noeud limite, et un identificateur de port d'un second port qui reçoit le message test, dans lequel le message de test contient l'identificateur de vérification ; et
apparier (304), par le contrôleur de réseau de transport, le premier port avec le second port en fonction de l'identificateur de vérification, pour acquérir la liaison inter-domaines, et envoyer, au second noeud limite, des informations sur le premier port et le second port qui ont été appariés.

2. Procédé selon la revendication 1, après la réception, par un contrôleur de réseau de transport qui est établi dans le premier réseau, d'une demande d'établissement de chemin inter-domaines, comprenant en outre de :
recevoir (201), par le contrôleur de réseau de transport, des chemins les plus courts qui vont de noeuds limites, connectés au premier réseau, dans le second réseau au dernier noeud, et les coûts correspondants, dans lequel les chemins les plus courts et les coûts correspondants sont envoyés en utilisant le canal de commande par un élément de calcul de chemin, PCE, qui est établi dans le second réseau ; et
de manière correspondante, l'acquisition, par le contrôleur de réseau de transport, d'un premier sous-chemin, dans le premier réseau, du chemin cible en fonction d'informations de topologie et d'informations TE du premier réseau comprend de :
acquérir (202), par le contrôleur de réseau de transport, le premier sous-chemin et le second sous-chemin en fonction des informations de topologie et des informations TE du premier réseau, des chemins les plus courts, et des coûts correspondants.

3. Procédé selon la revendication 2, dans lequel le message de chemin comprend en outre le second sous-chemin.

4. Procédé pour établir un chemin inter-domaines entre un premier réseau et un second réseau, dans lequel le premier réseau est un réseau de transport basé sur une commande centralisée, le second réseau est un réseau de transport basé sur une commande de protocole de commutation multiprotocole avec étiquette généralisée, GMPLS, comprenant de :
recevoir (401), par un second noeud limite dans le second réseau, un message de chemin qui est envoyé en utilisant un canal de commande par un contrôleur de réseau de transport qui est établi dans le premier réseau, dans lequel le message de chemin comprend un identificateur de connexion attribué à un chemin cible, des informations de premier noeud, des informations de dernier noeud, et des informations de bande passante, dans lequel le chemin cible est un chemin qui doit être établi suivant les besoins dans une demande d'établissement de chemin inter-domaines reçue par le contrôleur de réseau de transport ;
établir (402), par le second noeud limite et un dernier noeud correspondant aux informations de dernier noeud, un second sous-chemin, dans le second réseau, du chemin cible en fonction du message de chemin, et compléter la connexion de noeuds sur le second sous-chemin ; et
envoyer (403), par le second noeud limite, une ressource de réseau correspondant à une liaison inter-domaines au contrôleur de réseau de transport en utilisant le canal de commande, de sorte que le contrôleur de réseau de transport envoie, à un premier noeud limite du premier réseau, un message d'indication qui est utilisé pour ordonner au premier noeud limite de connecter un premier sous-chemin dans le premier réseau et le second sous-chemin, dans lequel la liaison inter-domaines est une liaison entre le second noeud limite et le premier noeud limite ;
dans lequel, avant la réception, par un second noeud limite dans le second réseau, d'un message de chemin qui est envoyé en utilisant un canal de commande par un contrôleur de réseau de transport qui est établi dans le premier réseau, le procédé comprend en outre de :
envoyer (501), par le second noeud limite, un message de contrôle de départ au contrôleur de réseau de transport en utilisant le canal de commande, le message de contrôle de départ comprenant un identificateur de port d'un premier port, d'un côté du second noeud limite, de la liaison inter-domaines ;
recevoir (502), par le second noeud limite, un message de réponse renvoyé par le contrôleur de réseau de transport, le message de réponse contenant un identificateur de vérification correspondant unique attribué au premier noeud limite par le contrôleur de réseau de transport ;
envoyer (503), par le second noeud limite, un message de test au premier noeud limite en utilisant le premier port, de sorte que le premier noeud limite transmet le message de test au contrôleur de réseau de transport, où le message de test contient l'identificateur de vérification ; et
recevoir (504), par le second noeud limite, des informations, envoyées par le contrôleur de réseau de transport, concernant le premier port et un second port qui ont été appariés, pour acquérir le chemin inter-domaines, où le second port est un port par l'utilisation duquel le premier noeud limite reçoit le message de test.

5. Procédé pour établir un chemin inter-domaines entre un premier réseau et un second réseau, dans lequel le premier réseau est un réseau de transport basé sur une commande de protocole de commutation multiprotocole avec étiquette généralisée, GMPLS, et le second réseau est un réseau de transport basé sur une commande centralisée, comprenant de :
recevoir (601), par un premier noeud limite du premier réseau, un message de chemin qui est envoyé par un premier noeud du premier réseau le long de noeuds sur un premier sous-chemin bond par bond, et transmettre, en utilisant un canal de commande, le message de chemin à un contrôleur de réseau de transport qui est établi dans le second réseau, dans lequel le message de chemin comprend un identificateur de connexion attribué à un chemin cible par le premier noeud, des informations de premier noeud, des informations de dernier noeud, et des informations de bande passante ;
recevoir (602), par le premier noeud limite, un message de réservation qui est envoyé par le contrôleur de réseau de transport en utilisant le canal de commande, dans lequel le message de réservation comprend une ressource de réseau correspondant à une liaison inter-domaines, l'identificateur de connexion, les informations de premier noeud, les informations de dernier noeud, et les informations de bande passante ; et transmettre (603), par le premier noeud limite, le message de réservation au premier noeud le long des noeuds sur le premier sous-chemin bond par bond, et compléter la connexion des noeuds sur le premier sous-chemin, et la connexion d'une liaison entre le premier sous-chemin et un second sous-chemin dans le second réseau, dans lequel une liaison entre un second noeud limite dans le second réseau et le premier noeud limite est la liaison inter-domaines entre le premier réseau et le second réseau.

6. Procédé pour établir un chemin inter-domaines entre un premier réseau et un second réseau, dans lequel le premier réseau est un réseau de transport basé sur une commande de protocole de commutation multiprotocole avec étiquette généralisée, GMPLS, et le second réseau est un réseau de transport basé sur une commande centralisée, comprenant de :
recevoir (701), par un contrôleur de réseau de transport qui est établi dans le second réseau, un message de chemin qui est envoyé par un premier noeud limite du premier réseau en utilisant un canal de commande, dans lequel le message de chemin comprend un identificateur de connexion attribué à un chemin cible, des informations de premier noeud, des informations de dernier noeud, et des informations de bande passante, dans lequel le chemin cible est un chemin qui doit être établi selon les besoins dans une demande d'établissement de chemin inter-domaines reçue par un premier noeud ;
acquérir (702), par le contrôleur de réseau de transport, un second sous-chemin, dans le second réseau, du chemin cible en fonction du message de chemin et d'informations de topologie et d'informations d'ingénierie de trafic, TE, du second réseau, dans lequel le second sous-chemin est un chemin entre un second noeud limite du second réseau et un dernier noeud correspondant aux informations de dernier noeud ; et allouer une ressource de réseau à une liaison entre des noeuds sur le second sous-chemin en fonction des informations de bande passante, de sorte que les noeuds établissent une connexion ; et
envoyer (703), par le contrôleur de réseau de transport, un message de réservation au premier noeud limite du premier réseau en utilisant le canal de commande, dans lequel le message de réservation comprend une ressource de réseau correspondant à une liaison inter-domaines, l'identificateur de connexion, les informations de premier noeud, les informations de dernier noeud, et les informations de bande passante, de sorte que le premier noeud limite et le premier noeud complètent la connexion de noeuds sur le premier sous-chemin en fonction du message de réservation, dans lequel la liaison inter-domaines est une liaison entre le second noeud limite et le premier noeud limite.

7. Procédé selon la revendication 6, dans lequel le message de chemin comprend en outre le second sous-chemin ; et
de manière correspondante, l'acquisition, par le contrôleur de réseau de transport, d'un second sous-chemin, dans le second réseau, du chemin cible en fonction du message de chemin et d'informations de topologie et d'informations TE du second réseau ; et l'allocation d'une ressource de réseau à une liaison entre des noeuds sur le second sous-chemin en fonction des informations de bande passante, de sorte que les noeuds établissent une connexion comprend de :
allouer, par le contrôleur de réseau de transport, la ressource de réseau à la liaison entre les noeuds sur le second sous-chemin en fonction du second sous-chemin et des informations de bande passante dans le message de chemin, de sorte que les noeuds établissent la connexion.

8. Contrôleur de réseau de transport (10) conçu pour établir un chemin inter-domaines entre un premier réseau et un second réseau, dans lequel le premier réseau est un réseau de transport basé sur une commande centralisée, le second réseau est un réseau de transport basé sur une commande de protocole de commutation multiprotocole avec étiquette généralisée, GMPLS, comprenant :
un module de réception (11), configuré pour recevoir une demande d'établissement de chemin inter-domaines, dans lequel la demande d'établissement de chemin inter-domaines comprend des informations de premier noeud, des informations de dernier noeud, et des informations de bande passante d'un chemin cible à établir, dans lequel un premier noeud correspondant aux informations de premier noeud est situé dans le premier réseau, et un dernier noeud correspondant aux informations de dernier noeud est situé dans le second réseau ;
un module d'acquisition (12), configuré pour acquérir un premier sous-chemin, dans le premier réseau, du chemin cible en fonction d'informations de topologie et d'informations d'ingénierie de trafic, TE, du premier réseau, dans lequel le premier sous-chemin est un chemin entre le premier noeud et un premier noeud limite du premier réseau ; et allouer une ressource de réseau à une liaison entre des noeuds sur le premier sous-chemin en fonction des informations de bande passante, de sorte que les noeuds établissent une connexion ; et
un module d'envoi (13), configuré pour envoyer un message de chemin à un second noeud limite du second réseau en utilisant un canal de commande, de sorte que le second noeud limite exécute un protocole de signalisation dans une pile de protocoles de commutation multiprotocole avec étiquette généralisée, GMPLS, en fonction du message de chemin, pour établir un second sous-chemin, dans le second réseau, du chemin cible, et pour compléter la connexion de noeuds sur le second sous-chemin, dans lequel le message de chemin comprend un identificateur de connexion attribué au chemin cible, les informations de premier noeud, les informations de dernier noeud, et les informations de bande passante, et une liaison inter-domaines entre le second noeud limite et le premier noeud limite, ladite liaison inter-domaines étant située entre le premier réseau et le second réseau ; dans lequel
le module de réception est en outre configuré pour : après avoir reçu une ressource de réseau envoyée par le second noeud limite en utilisant le canal de commande et qui correspond à la liaison inter-domaines, envoyer un message d'indication au premier noeud limite, dans lequel le message d'indication comprend la ressource de réseau correspondant à la liaison inter-domaines, et une ressource de réseau d'une liaison entre le premier noeud limite et un noeud adjacent, sur le premier sous-chemin, du premier noeud limite, de sorte que le premier noeud limite connecte le premier sous-chemin et le second sous-chemin ;
dans lequel
le module de réception est en outre configuré pour recevoir un message de contrôle de départ qui est envoyé par le second noeud limite en utilisant le canal de commande, dans lequel le message de contrôle de départ comprend un identificateur de port d'un premier port, d'un côté du second noeud limite, de la liaison inter-domaines ;
le module d'envoi est en outre configuré pour renvoyer un message de réponse au second noeud limite, dans lequel le message de réponse contient un identificateur de vérification correspondant unique attribué au premier noeud limite ;
le module de réception est en outre configuré pour recevoir un message de test qui est envoyé par le second noeud limite en utilisant le premier port et qui est transmis par le premier noeud limite, et un identificateur de port d'un second port qui reçoit le message de test, dans lequel le message de test contient l'identificateur de vérification ; et
le module d'acquisition est en outre configuré pour apparier le premier port avec le second port en fonction de l'identificateur de vérification, pour acquérir la liaison inter-domaines, et envoyer, au second noeud limite, des informations sur le premier port et le second port qui ont été appariés.

9. Contrôleur de réseau de transport selon la revendication 8, dans lequel le module de réception est en outre configuré pour :
recevoir des chemins les plus courts qui vont de noeuds limites, connectés au premier réseau, dans le second réseau au dernier noeud, et les coûts correspondants, dans lequel les chemins les plus courts et les coûts correspondants sont envoyés en utilisant le canal de commande par un élément de calcul de chemin, PCE, qui est établi dans le second réseau ; et
de manière correspondante, le module d'acquisition est en outre configuré pour : acquérir le premier sous-chemin et le second sous-chemin en fonction des informations de topologie et des informations TE du premier réseau, des chemins les plus courts, et des coûts correspondants.

10. Contrôleur de réseau de transport selon la revendication 9, dans lequel le message de chemin comprend en outre le second sous-chemin.

11. Noeud de réseau (20) conçu pour établir un chemin inter-domaines entre un premier réseau et un second réseau, dans lequel le premier réseau est un réseau de transport basé sur une commande centralisée, le second réseau est un réseau de transport basé sur une commande de protocole de commutation multiprotocole avec étiquette généralisée, GMPLS, comprenant :
un module de réception (21), configuré pour recevoir un message de chemin qui est envoyé en utilisant un canal de commande par un contrôleur de réseau de transport qui est établi dans le premier réseau, dans lequel le message de chemin comprend un identificateur de connexion attribué à un chemin cible, des informations de premier noeud, des informations de dernier noeud, et des informations de bande passante, dans lequel le chemin cible est un chemin qui doit être établi suivant les besoins dans une demande d'établissement de chemin inter-domaines reçue par le contrôleur de réseau de transport ;
un module de traitement (22), configuré pour établir un second sous-chemin, dans le second réseau, du chemin cible en fonction du message de chemin, et compléter la connexion de noeuds sur le second sous-chemin ; et
un module d'envoi (23), configuré pour envoyer une ressource de réseau correspondant à une liaison inter-domaines au contrôleur de réseau de transport en utilisant le canal de commande, de sorte que le contrôleur de réseau de transport envoie, à un premier noeud limite du premier réseau, un message d'indication qui est utilisé pour ordonner au premier noeud limite de connecter un premier sous-chemin dans le premier réseau et le second sous-chemin, dans lequel la liaison inter-domaines est une liaison entre le second noeud limite et le premier noeud limite ; dans lequel
le module d'envoi est en outre configuré pour envoyer un message de contrôle de départ au contrôleur de réseau de transport en utilisant le canal de commande, dans lequel le message de contrôle de départ comprend un identificateur de port d'un premier port, d'un côté du second noeud limite, de la liaison inter-domaines ;
le module de réception est en outre configuré pour recevoir un message de réponse renvoyé par le contrôleur de réseau de transport, dans lequel le message de réponse contient un identificateur de vérification correspondant unique qui est attribué au premier noeud limite par le contrôleur de réseau de transport ;
le module d'envoi est en outre configuré pour envoyer un message de test au premier noeud limite en utilisant le premier port, de sorte que le premier noeud limite transmet le message de test au contrôleur de réseau de transport, dans lequel le message de test contient l'identificateur de vérification ; et
le module de réception est en outre configuré pour recevoir des informations, envoyées par le contrôleur de réseau de transport, concernant le premier port et un second port qui ont été appariés, pour acquérir le chemin inter-domaines, dans lequel le second port est un port par l'utilisation duquel le premier noeud limite reçoit le message de test.

12. Noeud de réseau (30) conçu pour établir un chemin inter-domaines entre un premier réseau et un second réseau, dans lequel le premier réseau est un réseau de transport basé sur une commande de protocole de commutation multiprotocole avec étiquette généralisée, GMPLS, et le second réseau est un réseau de transport basé sur une commande centralisée, comprenant :
un module de réception (31), configuré pour recevoir un message de chemin qui est envoyé par un premier noeud du premier réseau le long de noeuds sur un premier sous-chemin bond par bond, et transmettre, en utilisant un canal de commande, le message de chemin à un contrôleur de réseau de transport qui est établi dans le second réseau, dans lequel le message de chemin comprend un identificateur de connexion attribué à un chemin cible par le premier noeud, des informations de premier noeud, des informations de dernier noeud, et des informations de bande passante ; dans lequel
le module de réception est en outre configuré pour recevoir un message de réservation qui est envoyé par le contrôleur de réseau de transport en utilisant le canal de commande, dans lequel le message de réservation comprend une ressource de réseau correspondant à une liaison inter-domaines, l'identificateur de connexion, les informations de premier noeud, les informations de dernier noeud, et les informations de bande passante ; et
un module d'envoi (32), configuré pour transmettre le message de réservation au premier noeud le long des noeuds sur le premier sous-chemin bond par bond, et compléter la connexion des noeuds sur le premier sous-chemin, et la connection une liaison entre le premier sous-chemin et un second sous-chemin dans le second réseau, dans lequel une liaison entre un second noeud limite dans le second réseau et le premier noeud limite est la liaison inter-domaines entre le premier réseau et le second réseau.

13. Contrôleur de réseau de transport (40) conçu pour établir un chemin inter-domaines entre un premier réseau et un second réseau, dans lequel le premier réseau est un réseau de transport basé sur une commande de protocole de commutation multiprotocole avec étiquette généralisée, GMPLS, et le second réseau est un réseau de transport basé sur une commande centralisée, comprenant :
un module de réception (41), configuré pour recevoir un message de chemin qui est envoyé par un premier noeud limite du premier réseau en utilisant un canal de commande, dans lequel le message de chemin comprend un identificateur de connexion attribué à un chemin cible, des informations de premier noeud, des informations de dernier noeud, et des informations de bande passante, dans lequel le chemin cible est un chemin qui doit être établi selon les besoins dans une demande d'établissement de chemin inter-domaines reçue par un premier noeud ;
un module d'acquisition (42), configuré pour acquérir un second sous-chemin, dans le second réseau, du chemin cible en fonction du message de chemin et d'informations de topologie et d'informations d'ingénierie de trafic, TE, du second réseau, dans lequel le second sous-chemin est un chemin entre un second noeud limite du second réseau et un dernier noeud correspondant aux informations de dernier noeud ; et allouer une ressource de réseau à une liaison entre des noeuds sur le second sous-chemin en fonction des informations de bande passante, de sorte que les noeuds établissent une connexion ; et
un module d'envoi (43), configuré pour envoyer un message de réservation au premier noeud limite du premier réseau en utilisant le canal de commande, dans lequel le message de réservation comprend une ressource de réseau correspondant à une liaison inter-domaines, l'identificateur de connexion, les informations de premier noeud, les informations de dernier noeud, et les informations de bande passante, de sorte que le premier noeud limite et le premier noeud complètent la connexion de noeuds sur le premier sous-chemin en fonction du message de réservation, dans lequel la liaison inter-domaines est une liaison entre le second noeud limite et le premier noeud limite.

14. Contrôleur de réseau de transport selon la revendication 13, dans lequel le message de chemin comprend en outre le second sous-chemin ; et
de manière correspondante, le module d'acquisition est spécifiquement configuré pour allouer la ressource de réseau à la liaison entre les noeuds sur le second sous-chemin en fonction du second sous-chemin et des informations de bande passante dans le message de chemin, de sorte que les noeuds établissent la connexion.
